(19) **Europäisches Patentamt**
**European Patent Office**
**Office européen des brevets**

(11) **EP 4 354 980 A1**

(12) **EUROPEAN PATENT APPLICATION**
published in accordance with Art. 153(4) EPC

(43) Date of publication:
**17.04.2024 Bulletin 2024/16**

(21) Application number: **22819366.0**

(22) Date of filing: **25.05.2022**

(51) International Patent Classification (IPC):
***H04W 52/18*** (2009.01)

(52) Cooperative Patent Classification (CPC):
**H04W 52/18; H04W 52/24**

(86) International application number:
**PCT/CN2022/095078**

(87) International publication number:
**WO 2022/257768 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2021 CN 202110657250**

(71) Applicant: **Huawei Technologies Co., Ltd.
Longgang
Shenzhen, Guangdong 518129 (CN)**

(72) Inventors:
• **HU, Mengshi
Shenzhen, Guangdong 518129 (CN)**
• **YU, Jian
Shenzhen, Guangdong 518129 (CN)**
• **GAN, Ming
Shenzhen, Guangdong 518129 (CN)**

(74) Representative: **Maiwald GmbH
Engineering
Elisenhof
Elisenstrasse 3
80335 München (DE)**

(54) **METHOD FOR DETERMINING TRANSMIT POWER IN WIRELESS LOCAL AREA NETWORK, AND RELATED APPARATUS**

(57) This application relates to the field of wireless communication, specifically applied to a wireless local area network that supports the 802.11 series standards, and in particular, to a method for determining transmit power in a wireless local area network and a related apparatus. The method includes: A station receives a trigger frame from a first access point, where the trigger frame is used to trigger the station to send a TB PPDU and indicate a resource unit allocated to the station. The station selects, based on a channel busy/idle state detected through sensing, some resource units from the allocated resource unit to transmit the TB PPDU, and calculates transmit power of the station based on a ratio of the selected resource units to the allocated resource unit. The station sends the TB PPDU on the selected resource units at the transmit power. According to embodiments of this application, in a scenario in which the station performs transmission by using some RUs/MRUs in an allocated MRU/RU, transmit power of the station can be reduced, to reduce interference of the station to another device.

FIG. 9

**Description**

This application claims priority to Chinese Patent Application No. 202110657250.2, filed with the China National Intellectual Property Administration on June 11, 2021 and entitled "METHOD FOR DETERMINING TRANSMIT POWER IN WIRELESS LOCAL AREA NETWORK AND RELATED APPARATUS", which is incorporated herein by reference in its entirety.

**TECHNICAL FIELD**

This application relates to the field of wireless communication technologies, and in particular, to a method for determining transmit power in a wireless local area network and a related apparatus.

**BACKGROUND**

A wireless local area network (wireless local area network, WLAN) has been developed for many generations, including the 802.11a/b/g, 802.11n, 802.11ac, and 802.11ax, the 802.11be under discussion, and the like. The 802.11ax standard may be referred to as a high efficiency (high efficiency, HE) standard, and the 802.11be standard may be referred to as an extremely high throughput (extremely high throughput, EHT) standard or a Wi-Fi 7 standard.

For uplink data transmission, a station (station, STA) may perform uplink data transmission after obtaining a transmission opportunity (transmission opportunity, TXOP) through channel contention, for example, obtaining the transmission opportunity through channel contention in an enhanced distributed channel access (enhanced distributed channel access, EDCA) manner. In the 802.11ax standard, a trigger frame-based uplink scheduling transmission method is further introduced. A trigger frame (trigger frame) sent by an access point (access point, AP) is used to schedule one or more STAs to perform uplink data transmission. A user information field of the trigger frame includes a resource unit (resource unit, RU) allocation (RU allocation) subfield, indicating a specific location of an RU allocated to the station. The 802.11be standard also includes a trigger frame-based uplink scheduling transmission method. The method is similar to the trigger frame-based uplink scheduling transmission method in the 802.11ax standard. A difference lies in that some signaling indications, for example, RU allocation in a 320 MHz, are added or extended. It should be noted that, only one RU can be allocated to one STA in the 802.11ax standard. However, the 802.11be standard allows to allocate a plurality of RUs to one STA. Allocating the plurality of RUs to one STA may also be understood as combining the plurality of RUs and allocating the plurality of RUs to one STA.

Currently, in a trigger frame-based uplink scheduling transmission method, a concept of an adaptive RU (adapted/adaptive RU) is proposed. To be specific, a triggered station may adaptively select, based on a channel busy/idle state detected through sensing, some RUs (these RUs are adaptive RUs) from an RU or a multiple RU (multiple RU, MRU) allocated by an AP to the station by using a trigger frame, to transmit a trigger-based physical layer protocol data unit (trigger based physical layer protocol data unit, TB PPDU), to avoid a channel detected as busy. This reduces a collision probability and improves spectrum utilization. However, when the station transmits the TB PPDU by using the adaptive RU, how to determine transmit power of the station is not resolved.

**SUMMARY**

Embodiments of this application provide a method for determining transmit power in a wireless local area network and a related apparatus, to resolve a problem of determining transmit power of a station in a scenario in which the station performs transmission by using some RUs/MRUs in an allocated MRU/RU. This reduces interference of the station to another device, and controls power of receiving a TB PPDU by an AP within a controllable range of the AP.

The following describes this application from different aspects. It should be understood that mutual reference may be made to the following implementations and beneficial effects of the different aspects.

According to a first aspect, this application provides a method for determining transmit power in a wireless local area network. The method includes: A station receives a trigger frame from a first access point, where the trigger frame is used to trigger the station to send a TB PPDU. The station sends the TB PPDU at first transmit power. The trigger frame indicates a first resource unit allocated to the station. The trigger frame includes an AP transmit power subfield and an uplink target receive power subfield. A second resource unit occupied by the TB PPDU is all or some resource units in the first resource unit. The first transmit power is determined based on an indication of the AP transmit power subfield, an indication of the uplink target receive power subfield, the second resource unit, and the first resource unit.

It can be learned that, in this solution, the transmit power of the station is jointly determined with reference to the resource unit (namely, the first resource unit) originally allocated to the station and a resource unit (namely, a second resource unit) actually used by the station. This can resolve a transmit power problem of the station in a scenario in which the station performs transmission by using some RUs in an allocated MRU/RU, reduce interference of the station to another device, and control power of receiving the TB PPDU by the AP within a controllable range of the AP.

According to a second aspect, this application provides a method for determining transmit power in a wireless local area network. The method includes: A first access point sends a trigger frame, and receives a TB PPDU from a station. The trigger frame indicates a first resource unit allocated to the station. The trigger frame includes an AP transmit power subfield and an uplink target receive power subfield. A second resource unit occupied by the TB PPDU is all or some resource units in the first resource unit. Power of receiving the TB PPDU by the first access point is determined based on first transmit power and a path loss from the first access point to the station. The first transmit power is determined based on an indication of the AP transmit power subfield, an indication of the uplink target receive power subfield, the second resource unit, and the first resource unit.

Optionally, power of receiving the TB PPDU by the first access point is a difference between the first transmit power and the path loss from the first access point to the station.

According to a third aspect, this application provides a communication apparatus. The communication apparatus may be a station or a chip in the station, for example, a Wi-Fi chip. The communication apparatus includes: a first unit, configured to receive a trigger frame, where the trigger frame indicates a first resource unit allocated to the station, and the trigger frame includes an access point AP transmit power subfield and an uplink target receive power subfield. The first unit is further configured to send a trigger-based physical layer protocol data unit TB PPDU at first transmit power. A second resource unit occupied by the TB PPDU is all or some resource units in the first resource unit. The first transmit power is determined based on an indication of the AP transmit power subfield, an indication of the uplink target receive power subfield, the second resource unit, and the first resource unit. The first unit may be implemented by using a communication interface or a transceiver.

Optionally, the communication apparatus further includes a processing unit, configured to generate the TB PPDU.

Optionally, the communication apparatus further includes a processing unit, configured to determine the first transmit power based on the indication of the AP transmit power subfield, the indication of the uplink target receive power subfield, the second resource unit, and the first resource unit.

According to a fourth aspect, this application provides a communication apparatus. The communication apparatus may be a first access point or a chip in the first access point, for example, a Wi-Fi chip. The communication apparatus includes a second unit, configured to send a trigger frame. The trigger frame indicates a first resource unit allocated to the station, and the trigger frame includes an access point AP transmit power subfield and an uplink target receive power subfield. The second unit is further configured to receive a TB PPDU. Power of receiving the TB PPDU is determined based on first transmit power and a path loss from the first access point to the station, and the first transmit power is determined based on an indication of the AP transmit power subfield, an indication of the uplink target receive power subfield, a second resource unit, and the first resource unit. The second unit may be implemented by using a communication interface or a transceiver.

Optionally, the communication apparatus further includes a processing unit, configured to generate the trigger frame.

In a possible implementation of any one of the foregoing aspects, the first transmit power is determined based on a value indicated by the AP transmit power subfield, a value indicated by the uplink target receive power subfield, a size of the second resource unit, and a size of the first resource unit.

Optionally, the first transmit power is determined based on the indication of the AP transmit power subfield, the indication of the uplink target receive power subfield, and a ratio of the size of the second resource unit to the size of the first resource unit.

It can be learned that, this solution provides a manner of jointly determining the transmit power of the station by using a ratio of the resource unit (namely, the first resource unit) originally allocated to the station and a resource unit (namely, a second resource unit) actually used by the station.

Optionally, the size of the first resource unit is determined based on a total quantity of subcarriers included in the first resource unit, and the size of the second resource unit is determined based on a total quantity of subcarriers included in the second resource unit.

Optionally, the size of the first resource unit is a bandwidth of the first resource unit, and the size of the second resource unit is a bandwidth of the second resource unit.

Optionally, a logarithm domain representation manner of the first transmit power is:

$$Tx_{pwr}^{STA} = PL_{DL} + TargetRx_{pwr} - 10\log_{10}(\frac{RU\_SIZE_{allocated}}{RU\_SIZE_{new}}).$$

$Tx_{pwr}^{STA}$ indicates first transmit power. $TargetRx_{pwr}$ is a value indicated by an uplink target receive power subfield. $RU\_SIZE_{alocated}$ indicates a size of a first resource unit allocated to a station. $RU\_SIZE_{new}$ indicates a size of a second resource unit occupied by a TB PPDU. $PL_{DL}$ indicates a path loss from a first access point to the station, and the path loss from the first access point to the station is determined based on an indication of an AP transmit power subfield and receive power of the station. For example, $PL_{DL}$ is equal to a difference between transmit power of an AP and receive signal power of the station. The transmit power of the AP is indicated by using the AP transmit power subfield.

It can be learned that, this solution provides a specific manner of calculating the transmit power of the station. The transmit power of the station is reduced. This can reduce interference of the station to another device, and control power of receiving the TB PPDU by the AP within a controllable range of the AP.

Optionally, the size of the first resource unit is determined based on a quantity of first bandwidth sizes included in a bandwidth of the first resource unit, and the size of the second resource unit is determined based on a quantity of first bandwidth sizes included in a bandwidth of the second resource unit. The first bandwidth size is any one of the following: 20 MHz, 40 MHz, 80 MHz, 160 MHz, and 320 MHz.

Optionally, a logarithm domain representation manner of the first transmit power is:

$$Tx_{pwr}^{STA} = PL_{DL} + TargetRx_{pwr} - 10\log_{10}(\frac{RU\_BW\_Number_{allocated}}{RU\_BW\_Number_{new}}).$$

$Tx_{pwr}^{STA}$ indicates first transmit power. $TargetRx_{pwr}$ is a value indicated by an uplink target receive power subfield. $RU\_BW\_Number_{alocated}$ indicates a quantity of first bandwidth sizes included in a bandwidth of a first resource unit. $RU\_BW\_Number_{new}$ indicates a quantity of first bandwidth sizes included in a bandwidth of a second resource unit. $PL_{DL}$ indicates a path loss from a first access point to the station, and the path loss from the first access point to the station is determined based on an indication of an AP transmit power subfield and receive power of the station. For example, $PL_{DL}$ is equal to a difference between transmit power of an AP and receive signal power of the station. The transmit power of the AP is indicated by using the AP transmit power subfield.

Optionally, the bandwidth of the first resource unit is from a lowest frequency of the first resource unit to a highest frequency of the first resource unit, and the bandwidth of the second resource unit is from a lowest frequency of the second resource unit to a highest frequency of the second resource unit. Alternatively, the bandwidth of the first resource unit is a sum of bandwidths occupied by one or more resource units included in the first resource unit, and the bandwidth of the second resource unit is a sum of bandwidths occupied by one or more resource units included in the second resource unit.

It can be learned that this solution provides another specific manner of calculating the transmit power of the station, which is implemented by using the bandwidth of the resource unit.

In a possible implementation of any one of the foregoing aspects, the trigger frame further includes indication information, and the indication information indicates a manner of determining the first transmit power. The manner of determining the first transmit power includes one or more of the following: a first determining manner, a second determining manner, and a third determining manner. The first determining manner is determining based on the value indicated by the AP transmit power subfield, the value indicated by the uplink target receive power subfield, the total quantity of subcarriers included in the second resource unit, and the total quantity of subcarriers included in the first resource unit. The second determining manner is determining based on the value indicated by the AP transmit power subfield, the value indicated by the uplink target receive power subfield, the quantity of first bandwidth sizes included in the bandwidth of the second resource unit, and the quantity of first bandwidth sizes included in the bandwidth of the first resource unit. The third determining manner is determining based on the indication of the AP transmit power subfield and the indication of the uplink target receive power subfield.

Optionally, the indication information is located in a common information field or a user information field of the trigger frame.

It can be learned that in this solution, the indication information is carried in the trigger frame to indicate a manner in which the station calculates the transmit power of the station, so that the first access point can more effectively manage and control the station.

According to a fifth aspect, this application provides a method for determining transmit power based on spatial reuse. The method includes: A second access point receives a parameterized spatial reuse reception (Parameterized Spatial Reuse Reception, PSRR) PPDU that includes a trigger frame. The trigger frame indicates a first resource unit allocated to a station. The second access point determines a second resource unit occupied by a TB PPDU that is sent by the station. The second resource unit is some resource units in the first resource unit. The second access point sends a PSRT PPDU at transmit power of the parameterized spatial reuse transmission (Parameterized Spatial Reuse Transmission, PSRT) PPDU. The transmit power of the PSRT PPDU is determined based on the first resource unit, the second resource unit, an indication of an EHT parameterized spatial reuse (Parameterized Spatial Reuse, PSR) field included in the TB PPDU, and/or an indication of an EHT uplink (uplink, UL) PSR field included in the trigger frame, and receive power of receiving the PSRR PPDU by the second access point.

It can be learned that, in this solution, the transmit power of the PSRT PPDU is jointly determined by using the resource unit (namely, a first resource unit) originally allocated to the station, a resource unit (namely, a second resource unit) actually used by the station, and the EHT PSR/EHT UL PSR. This can resolve a transmit power problem of the PSRT PPDU when the station adopts spatial reuse in an adaptive RU transmission scenario, so that the second access point obtains a larger gain.

According to a sixth aspect, this application provides a communication apparatus. The communication apparatus may be a second access point or a chip in the second access point, for example, a Wi-Fi chip. The communication apparatus includes: a second unit, configured to receive a PSRR PPDU that includes a trigger frame, where the trigger frame indicates a first resource unit allocated to a station; and a processing unit, configured to determine a second resource unit occupied by a TB PPDU sent by the station, where the second resource unit is some resource units in the first resource unit. The second unit is further configured to send a PSRT PPDU at transmit power of the PSRT PPDU. The transmit power of the PSRT PPDU is determined based on the first resource unit, the second resource unit, an indication of an EHT PSR field included in the TB PPDU, and/or an indication of an EHT UL PSR field included in the trigger frame, and receive power of receiving the PSRR PPDU by the second access point.

In a possible implementation of the fifth aspect or the sixth aspect, the transmit power of the PSRT PPDU is less than or equal to a difference between a PSR value and the receive power of receiving the PSRR PPDU by the second access point. The PSR value is determined based on the first resource unit, the second resource unit, the indication of the EHT parameterized spatial reuse PSR field included in the TB PPDU, and/or the indication of the EHT uplink parameterized spatial reuse UL PSR field included in the trigger frame. It should be understood that the PSR value herein may be a PSR value of a total bandwidth (a bandwidth for sending the PSRR PPDU herein).

It can be learned that this solution provides a manner of calculating the transmit power of the PSRT PPDU in the total bandwidth in a scenario in which an adaptive RU is introduced. This helps the second access point send the PSRT PPDU.

In a possible implementation of the fifth aspect or the sixth aspect, the first resource unit further includes a third resource unit, and the third resource unit is a difference set of the first resource unit and the second resource unit. In other words, the third resource unit is a resource unit that is not used to transmit the TB PPDU in the first resource unit.

Optionally, transmit power of the PSRT PPDU on the third resource unit is less than or equal to a difference between a PSR value of the third resource unit and receive power of receiving the PSRR PPDU by the second access point on the third resource unit. The PSR value of the third resource unit is -26 dBm or positive infinity. Alternatively, the PSR value of the third resource unit is a sum of a value indicated by a first EHT PSR field included in the TB PPDU or a value indicated by a first EHT UL PSR field included in the trigger frame and a preset value. The first EHT PSR field/first EHT UL PSR field corresponds to the third resource unit, or a frequency indication range of the first EHT PSR field/first EHT UL PSR field includes the third resource unit, or a frequency indication range of the first EHT PSR field/first EHT UL PSR field overlaps the third resource unit. For example, the preset value is 3 dB.

Optionally, transmit power of the PSRT PPDU on one 20 MHz sub-channel on which the third resource unit is located is less than or equal to a difference between a PSR value of the 20 MHz sub-channel and receive power of receiving the PSRR PPDU by the second access point on the 20 MHz sub-channel. The PSR value of one 20 MHz sub-channel is -26 dBm or positive infinity. Alternatively, the PSR value of one 20 MHz sub-channel is a sum of a value indicated by a first EHT PSR field included in the TB PPDU or a value indicated by a first EHT UL PSR field included in the trigger frame and a preset value. The first EHT PSR field/first EHT UL PSR field corresponds to the third resource unit, or a frequency indication range of the first EHT PSR field/first EHT UL PSR field includes the third resource unit, or a frequency indication range of the first EHT PSR field/first EHT UL PSR field overlaps the third resource unit. For example, the preset value is 3 dB.

Optionally, the PSR value of the third resource unit may be a larger value of values indicated by two EHT PSR fields included in the TB PPDU. Alternatively, the PSR value of the third resource unit may be a larger value of values indicated by two EHT UL PSR fields included in the trigger frame. Similarly, the PSR value of one 20 MHz sub-channel is a larger value of values indicated by two EHT PSR fields included in the TB PPDU. Alternatively, the PSR value of one 20 MHz sub-channel may be a larger value of values indicated by two EHT UL PSR fields included in the trigger frame.

It can be learned that, in this solution, the second access point changes a spatial reuse reading rule (at a granularity of the resource unit or the 20 MHz sub-channel) by obtaining an adaptive RU used by the station to transmit the TB PPDU, to resolve the transmit power problem of the PSRT PPDU. This can increase the transmit power of the second access point, so that the second access point obtains a larger gain.

According to a seventh aspect, this application provides a method for determining a spatial reuse parameter field in a PPDU. The method includes: A station receives a PSRR PPDU that includes a trigger frame, and sends a TB PPDU. The trigger frame indicates a first resource unit allocated to the station. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame.

It can be learned that, in this solution, when the station transmits the TB PPDU by using an adaptive RU, the value indicated by the EHT PSR field is determined based on the resource unit (namely, a first resource unit) originally allocated to the station, a resource unit (namely, a second resource unit) actually used by the station. This resolves a design problem of the EHT PSR field in a scenario of an overlapping basic service set plus spatial reuse, so that the PSRT PPDU can use larger transmit power on some resource units, to obtain a larger gain.

According to an eighth aspect, this application provides a communication apparatus. The communication apparatus may be a station or a chip in the station, for example, a Wi-Fi chip. The communication apparatus includes a first unit, configured to receive a PSRR PPDU that includes a trigger frame. The trigger frame indicates a first resource unit allocated to the station. The first unit is further configured to send a TB PPDU. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame.

Optionally, the communication apparatus further includes a processing unit, configured to generate the TB PPDU.

Optionally, the processing unit is configured to determine, based on the first resource unit and the second resource unit, a value indicated by the first EHT PSR field.

In a possible implementation of the seventh aspect or the eighth aspect, the first resource unit further includes a third resource unit, and the third resource unit is a difference set of the first resource unit and the second resource unit. A frequency range of the third resource unit is greater than or equal to a frequency indication range of the first EHT PSR field included in the TB PPDU.

Optionally, the value indicated by the first EHT PSR field is -26 dBm or positive infinity.

Optionally, the value indicated by the first EHT PSR field is a sum of a value indicated by the first EHT UL PSR field included in the trigger frame and a preset value.

Optionally, the value indicated by the first EHT PSR field is a larger value of the value indicated by the first EHT UL PSR field and the value indicated by the second EHT UL PSR field included in the trigger frame.

It can be learned that in this solution, the value indicated by the EHT PSR field is changed. This can resolve a design problem of the EHT PSR field in overlapping basic service set and spatial reuse scenarios, resolve a transmit power problem of the PSRT PPDU, and increase transmit power of a second access point, so that the second access point obtains a larger gain.

According to a ninth aspect, this application provides a communication apparatus. The communication apparatus may be a station or a chip in the station, for example, a Wi-Fi chip, and includes a processor and a communication interface.

In a design, the communication apparatus is configured to: receive a trigger frame, where the trigger frame indicates a first resource unit allocated to the station, and the trigger frame includes an access point AP transmit power subfield and an uplink target receive power subfield, and send a trigger-based physical layer protocol data unit TB PPDU at first transmit power, where a second resource unit occupied by the TB PPDU is all or some resource units in the first resource unit. The first transmit power is determined based on an indication of the AP transmit power subfield, an indication of the uplink target receive power subfield, the second resource unit, and the first resource unit.

Optionally, the processor is configured to generate the TB PPDU.

Optionally, the processor is further configured to determine the first transmit power based on the indication of the AP transmit power subfield, the indication of the uplink target receive power subfield, the second resource unit, and the first resource unit.

In a design, the communication apparatus is configured to: receive a PSRR PPDU that includes a trigger frame, where the trigger frame indicates a first resource unit allocated to the station, and send a TB PPDU. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame.

Optionally, the processor is configured to generate the TB PPDU.

Optionally, the processor is further configured to determine, based on the first resource unit and the second resource unit, a value indicated by the first EHT PSR field.

According to a tenth aspect, this application provides a communication apparatus. The communication apparatus includes a processor and a communication interface.

In a design, the communication apparatus may be a first access point or a chip in the first access point, for example, a Wi-Fi chip. The communication apparatus is configured to: send a trigger frame, where the trigger frame indicates a first resource unit allocated to the station, and the trigger frame includes an access point AP transmit power subfield and an uplink target receive power subfield, and receive a TB PPDU. Power of receiving the TB PPDU is determined based on first transmit power and a path loss from the first access point to the station, and the first transmit power is determined based on an indication of the AP transmit power subfield, an indication of the uplink target receive power subfield, a second resource unit, and the first resource unit.

Optionally, the processor is configured to generate the trigger frame.

In a design, the communication apparatus may be a second access point or a chip in the second access point, for example, a Wi-Fi chip. The communication interface is configured to receive a PSRR PPDU that includes a trigger frame, where the trigger frame indicates a first resource unit allocated to the station. The processor is configured to determine a second resource unit occupied by a TB PPDU sent by the station, where the second resource unit is some resource units in the first resource unit. The communication interface is further configured to send a PSRT PPDU at transmit power of the PSRT PPDU. The transmit power of the PSRT PPDU is determined based on the first resource unit, the second resource unit, an indication of an EHT PSR field included in the TB PPDU, and/or an indication of an EHT UL PSR field included in the trigger frame, and receive power of receiving the PSRR PPDU by the second access point.

According to an eleventh aspect, this application provides an apparatus. The apparatus is implemented in a product form of a chip, and includes an input/output interface and a processing circuit.

In a design, the apparatus is a chip in the station according to the first aspect. The input/output interface is configured to input a trigger frame received by using an antenna and a radio frequency circuit, where the trigger frame indicates a first resource unit allocated to the station, and the trigger frame includes an access point AP transmit power subfield and an uplink target receive power subfield. The input/output interface is further configured to output a TB PPDU, and after the TB PPDU is processed by using the radio frequency circuit, send the TB PPDU by using the antenna at first transmit power. A second resource unit occupied by the TB PPDU is all or some resource units in the first resource unit. The first transmit power is determined based on an indication of the AP transmit power subfield, an indication of the uplink target receive power subfield, the second resource unit, and the first resource unit.

Optionally, the processing circuit is configured to generate the TB PPDU.

Optionally, the processing circuit is further configured to determine the first transmit power based on the indication of the AP transmit power subfield, the indication of the uplink target receive power subfield, the second resource unit, and the first resource unit.

In a design, the apparatus is a chip in the station according to the seventh aspect. The input/output interface is configured to input a PSRR PPDU that includes a trigger frame and that is received by using an antenna and a radio frequency circuit, where the trigger frame indicates a first resource unit allocated to the station. The input/output interface is further configured to output a TB PPDU, and after the TB PPDU is processed by using the radio frequency circuit, send the TB PPDU by using the antenna. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame.

Optionally, the processing circuit is configured to generate the TB PPDU.

Optionally, the processing circuit is further configured to determine, based on the first resource unit and the second resource unit, a value indicated by the first EHT PSR field.

According to a twelfth aspect, this application provides an apparatus. The apparatus is implemented in a product form of a chip, and includes an input/output interface and a processing circuit.

In a design, the apparatus is a chip in the first access point according to the second aspect. The input/output interface is configured to output a trigger frame, and after the trigger frame is processed by using a radio frequency circuit, send the trigger frame by using the antenna. The trigger frame indicates a first resource unit allocated to the station, and the trigger frame includes an access point AP transmit power subfield and an uplink target receive power subfield. The input/output interface is further configured to input a TB PPDU received by using the antenna and the radio frequency circuit. Power of receiving the TB PPDU is determined based on first transmit power and a path loss from the first access point to the station, and the first transmit power is determined based on an indication of the AP transmit power subfield, an indication of the uplink target receive power subfield, a second resource unit, and the first resource unit.

Optionally, the processing circuit is configured to generate the trigger frame.

In a design, the apparatus is a chip in the second access point according to the fifth aspect. The input/output interface is configured to input a PSRR PPDU that includes a trigger frame and that is received by using an antenna and a radio frequency circuit, where the trigger frame indicates a first resource unit allocated to the station. The processing circuit is configured to determine a second resource unit occupied by a TB PPDU sent by the station, where the second resource unit is some resource units in the first resource unit. The input/output interface is further configured to output a PSRT PPDU, and after the PSRT PPDU is processed by using the radio frequency circuit, send the PSRT PPDU by using the antenna at transmit power of the PSRT PPDU. The transmit power of the PSRT PPDU is determined based on the first resource unit, the second resource unit, an indication of an EHT PSR field included in the TB PPDU, and/or an indication of an EHT UL PSR field included in the trigger frame, and receive power of receiving the PSRR PPDU by the second access point.

According to a thirteenth aspect, this application provides a computer-readable storage medium, where the computer-readable storage medium stores program instructions, and when the program instructions are run on a computer, the computer is enabled to perform the method according to any one of the first aspect, the second aspect, the fifth aspect, or the seventh aspect.

According to a fourteenth aspect, this application provides a computer program product including program instructions. When the computer program product runs on a computer, the computer is enabled to perform the method according to any one of the first aspect, the second aspect, the fifth aspect, and the seventh aspect.

Embodiments of this application can resolve a transmit power problem of the station in a scenario in which the station performs transmission by using some RUs in the allocated MRU/RU. This reduces interference of the station to another device, and controls the power of receiving the TB PPDU by the AP within the controllable range of the AP.

## BRIEF DESCRIPTION OF DRAWINGS

To describe the technical solutions in embodiments of this application more clearly, the following briefly describes the accompanying drawings used for describing the embodiments.

FIG. 1 is a schematic diagram of an architecture of a wireless communication system according to an embodiment of this application;

FIG. 2a is a schematic diagram of a structure of an access point according to an embodiment of this application;

FIG. 2b is a schematic diagram of a structure of a station according to an embodiment of this application;

FIG. 3a is a schematic diagram of transmission of an HE TB PPDU on which carrier sense is performed;

FIG. 3b is a schematic diagram of transmitting a TB PPDU by using an adaptive RU;

FIG. 4 is a schematic diagram of a power-related subfield in a trigger frame in the 802. 1 1be;

FIG. 5a is a schematic diagram of an OBSS formed by partially overlapping one BSS and another BSS;

FIG. 5b is a schematic diagram of an OBSS formed by one BSS including another BSS;

FIG. 6a is a schematic flowchart of a spatial reuse method based on parameterized spatial reuse in the 802.1 1ax;

FIG. 6b is a schematic flowchart of a spatial reuse method based on parameterized spatial reuse in the 802. 1 1be;

FIG. 7 is a schematic diagram of a UL PSR field in a trigger frame in the 802. 1 1be;

FIG. 8 is a schematic diagram of simultaneously scheduling HE TB PPDU and EHT TB PPDU transmission;

FIG. 9 is a schematic flowchart of a method for determining transmit power in a wireless local area network according to an embodiment of this application;

FIG. 10 is another schematic flowchart of a method for determining transmit power in a wireless local area network according to an embodiment of this application;

FIG. 11A and FIG. 11B are a schematic flowchart of a method for determining transmit power based on spatial reuse according to an embodiment of this application;

FIG. 12 is a schematic diagram of a first resource unit, a second resource unit, and a third resource unit according to an embodiment of this application;

FIG. 13 is a schematic flowchart of a method for determining a spatial reuse parameter field in a PPDU according to an embodiment of this application;

FIG. 14 is a schematic diagram of a third resource unit and a frequency indication range of an EHT PSR field according to an embodiment of this application;

FIG. 15 is a schematic diagram of a structure of a communication apparatus 1 according to an embodiment of this application;

FIG. 16 is a schematic diagram of a structure of a communication apparatus 2 according to an embodiment of this application; and

FIG. 17 is a schematic diagram of a structure of a communication apparatus 1000 according to an embodiment of this application.

## DESCRIPTION OF EMBODIMENTS

The following clearly and completely describes technical solutions in embodiments of this application with reference to the accompanying drawings in embodiments of this application.

In descriptions of this application, unless otherwise specified, "/" means "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a or b or c; a and b; a and c; b and c; or a, b, and c. a, b, and c each may be singular or plural.

In description of this application, the terms such as "first" and "second" do not limit a quantity and an execution sequence, and the terms such as "first" and "second" do not limit a difference.

In this application, the terms such as "example" or "for example" are used to represent giving an example, an illustration, or descriptions. Any embodiment or design scheme described as "example" or "for example" in this application shall not be construed as being more preferred or having more advantages than another embodiment or design scheme. To be precise, the terms "example", "in an example", "for example", or the like are intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

It should be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

An embodiment of this application provides a method for determining transmit power in a wireless local area network. Transmit power of a STA is calculated by using an indication of an AP transmit power subfield, an indication of an uplink target receive power subfield, and a ratio of a size of a first resource unit (allocated by an AP to the STA) to a size of a second resource unit (actually used by the STA for transmission) (the second resource unit is some resource units in the first resource unit). A TB PPDU is sent at the calculated transmit power. This can resolve a transmit power problem of the station in a scenario in which the station performs transmission by using some RUs in an allocated MRU/RU, and control power of receiving the TB PPDU by the AP within a controllable range of the AP. The method for determining the transmit power in the wireless local area network may be applied to a wireless communication system, for example, a wireless local area network system. The method for determining the transmit power in the wireless local area network may be implemented by a communication device in the wireless communication system or a chip or a processor in a communication device. The communication device may be an access point device or a station device. The communication device may alternatively be a wireless communication device that supports parallel transmission on a plurality of links. For example, the communication device may be referred to as a multi-link device (multi-link device, MLD) or a multi-band device. Compared with a communication device that supports only single-link transmission, the multi-link device has higher transmission efficiency and a larger throughput rate.

The technical solutions provided in this application may be applied to various communication systems, for example, a system using the 802.11 standard. For example, the 802.11 standard includes but is not limited to the 802.11be standard or a next-generation 802.11 standard. Scenarios to which the technical solutions of this application are applicable include: communication between an AP and one or more STAs, or communication between APs, or communication between STAs. In embodiments of this application, the term "communication" may also be described as "data transmission", "information transmission", or "transmission".

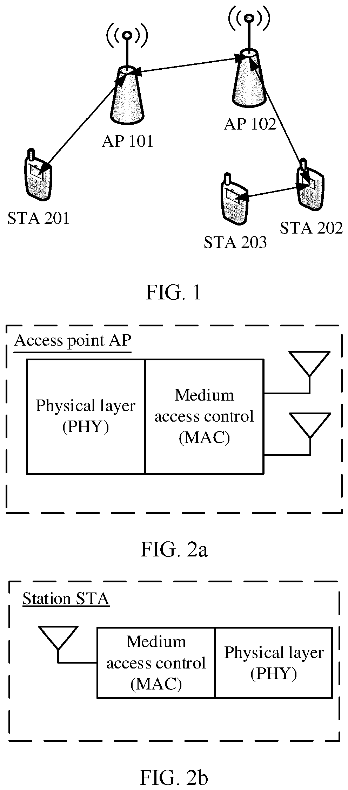

FIG. 1 is a schematic diagram of an architecture of a wireless communication system according to an embodiment of this application. As shown in FIG. 1, the wireless communication system may include one or more APs (for example, an AP 101 and an AP 102 in FIG. 1) and one or more STAs (for example, a STA 201, a STA 202, and a STA 203 in FIG. 1). Both the AP and the STA support a WLAN communication protocol. The communication protocol may include the 802.11be (or referred to as Wi-Fi 7, EHT protocol), and may further include protocols such as the 802.11ax and the 802.11ac. Certainly, the communication protocol may further include a next-generation protocol of the 802.11be and the like with continuous evolution and development of communication technologies. A WLAN is used as an example. An apparatus for implementing the method in this application may be an AP or a STA in the WLAN, or a chip or a processing system disposed in the AP or the STA.

The access point (for example, the AP 101 or the AP 102 in FIG. 1) in this application is an apparatus with a wireless communication function, supports communication by using a WLAN protocol, and has a function of communicating with another device (for example, the station or another access point) in the WLAN. It is clear that the access point may further have a function of communicating with another device. In the WLAN system, the access point may be referred to as an access point station (AP STA). The apparatus having a wireless communication function may be an entire device, or may be a chip or a processing system installed in an entire device. A device in which the chip or the processing system is installed may implement the method and the function in embodiments of this application under control of the chip or the processing system. The AP in embodiments of this application is an apparatus that provides a service for the STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or a processing system in these devices in various forms, to implement the method and the function in embodiments of this application.

Optionally, the station (for example, the STA 201, the STA 202, or the STA 203 in FIG. 1) in this application is an apparatus having a wireless communication function, supports communication according to the WLAN protocol, and has a capability of communicating with another station or an access point in a WLAN network. In the WLAN system, the station may be referred to as a non-access point station (non-access point station, non-AP STA). For example, the STA is any user communication device that allows a user to communicate with the AP and further communicate with the WLAN. The apparatus having a wireless communication function may be an entire device, or may be a chip or a processing system installed in an entire device. A device in which the chip or the processing system is installed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in an internet of things, a vehicle-mounted communication apparatus in an internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, a wearable device such as an augmented reality (augmented reality, AR) device and a virtual reality (virtual reality, VR) device), a smart device in smart office (for example, a printer, a projector, a loudspeaker, or a stereo), an internet of vehicle device in the internet of vehicle, an infrastructure (for example, a vending machine, a self-service navigation station of a supermarket, a self-service cash register device, or a self-service ordering machine) in a daily life scenario, a device in a large sports and music venue, and the like. Specific forms of the STA and the AP are not limited in embodiments of this application, and are only examples for description herein.

It should be understood that the 802.11 standard focuses on a physical layer (physical layer, PHY) part and a medium access control (medium access control, MAC) layer part. Refer to FIG. 2a for an example. FIG. 2a is a schematic diagram of a structure of an access point according to an embodiment of this application. The AP may be a multi-antenna/multi-radio frequency, or may be a single-antenna/single-radio frequency. The antenna/radio frequency is used to send/receive a data packet (the data packet in this specification may also be referred to as a physical layer protocol data unit, namely, a PPDU). In an implementation, an antenna or a radio frequency part of the AP may be separated from a main body of the AP, that is, may be remotely disposed. In FIG. 2a, the AP may include a physical layer processing circuit and a medium access control layer processing circuit. The physical layer processing circuit may be configured to process a physical layer signal, and the MAC layer processing circuit may be configured to process a MAC layer signal. In another example. FIG. 2b is a schematic diagram of a structure of a station according to an embodiment of this application. FIG. 2b is a schematic diagram of a structure of a single-antenna/radio frequency STA. In an actual scenario, the STA may alternatively be multi-antenna/multi-radio frequency, and may be a device with more than two antennas. The antenna/radio frequency is used to send/receive a data packet. In an implementation, an antenna or a radio frequency part of the STA may be separated from a main body of the STA, that is, may be remotely disposed. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

1. TB PPDU transmission procedure and adaptive RU for carrier sense (Carrier Sensing, CS)

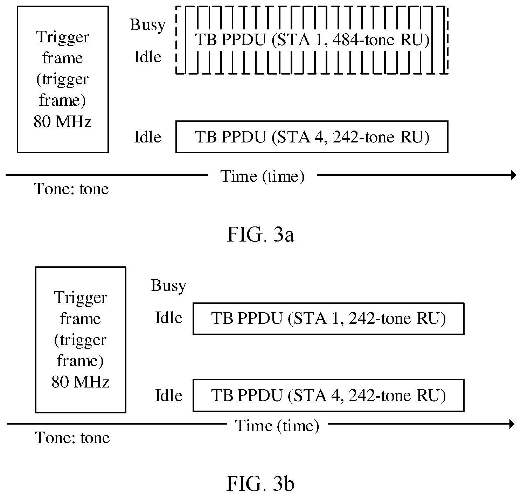

In a trigger frame-based uplink scheduling transmission method, a trigger frame sent by an AP includes a carrier sense required (CS required) field, indicating that a station needs to perform carrier sense. Therefore, when performing TB PPDU transmission, the STA performs carrier sense on one or more 20 MHz sub-channels on which an MRU/RU allocated to the STA is located, and detects whether sensed energy exceeds one predetermined threshold. If energy sensed by the STA on a specific 20 MHz sub-channel exceeds the predetermined threshold, it indicates that the 20 MHz sub-channel is busy. If energy sensed by the STA on a specific 20 MHz sub-channel does not exceed the predetermined threshold, it indicates that the 20 MHz sub-channel is idle. According to the 802.11ax standard, if at least one 20 MHz sub-channel in a frequency range in which an RU allocated to the STA is located is busy, an HE TB PPDU cannot be transmitted. This prevents interference to other transmission. FIG. 3a is a schematic diagram of transmission of an HE TB PPDU on which carrier sense is performed. An RU allocated to a STA 1 is a 484-tone RU, and a frequency range corresponding to the 484-tone RU is 40 MHz, including two 20 MHz sub-channels. The STA 1 performs carrier sense before transmission. If the STA 1 finds that one of the 20 MHz sub-channels is busy and the other 20 MHz sub-channel is idle, the STA 1 cannot perform transmission on the allocated 484-tone RU. An RU allocated to a STA 4 is a 242-tone RU, and a frequency range corresponding to the 242-tone RU is 20 MHz, including one 20 MHz sub-channel. The STA 4 performs carrier sense before transmission. If the STA 4 finds that the 20 MHz sub-channel is idle, the STA 4 may transmit the HE TB PPDU on the allocated 242-tone RU. It should be understood that the 484-tone RU indicates one resource unit including 484 tones. Similarly, the 242-tone RU indicates one resource unit including 242 tones. A Z-tone-RU in the following indicates a similar meaning, in other words, indicates one resource unit including Z (Z is a positive integer) tones. Details are not described in the following.

In a trigger frame-based uplink scheduling transmission method in the 802.11be, a concept of an adaptive RU is proposed. To be specific, a triggered station may adaptively select, based on a channel busy/idle state detected through sensing, some RUs (these RUs are adaptive RUs) from an RU or a multiple RU (multiple RU, MRU) allocated by the trigger frame to the station, to transmit a TB PPDU. This avoids a channel detected as busy. FIG. 3b is a schematic diagram of transmitting a TB PPDU by using an adaptive RU. An RU allocated to a STA 1 is a 484-tone RU, and a frequency range corresponding to the 484-tone RU is 40 MHz, including two 20 MHz sub-channels. The STA 1 performs carrier sense before transmission. If the STA 1 finds that one of the 20 MHz sub-channels is busy and the other 20 MHz sub-channel is idle, the STA 1 may transmit the TB PPDU on the idle 20 MHz sub-channel (or a 242-tone RU). The idle 242-tone RU may be referred to as the adaptive RU. An RU allocated to a STA 4 is a 242-tone RU, and a frequency range corresponding to the 242-tone RU is 20 MHz, including one 20 MHz sub-channel. The STA 4 performs carrier sense before transmission. If the STA 4 finds that the 20 MHz sub-channel is idle, the STA 4 may transmit the TB PPDU on the allocated 242-tone RU.

When there is a busy sub-channel in an MRU/RU allocated to the STA (in this specification, "busy sub-channel" means that a sub-channel is in a busy state), the STA may still perform transmission if the following two conditions are met: (1) The allocated MRU/RU includes at least one idle sub-channel (in this specification, an "idle sub-channel" means that a sub-channel is in an idle state). (2) There is an available resource unit that meets a specification in a resource unit corresponding to the at least one idle sub-channel (not all resource unit styles can be sent). Herein, the available resource unit that meets a specification (namely, the adaptive RU) may be in an MRU/RU format currently supported by the 802. 1 1be. For details, refer to current descriptions of the 802. 1 1be standard. Because this application does not relate to a specific adaptive RU format, details are not described herein.

It should be understood that, for ease of description, in this application, the adaptive RU indicates a resource unit with a changing size (herein, it means that a resource unit actually used by the station for transmission is different from the MRU/RU allocated to the station in size). This term also covers an adaptive MRU. No distinction is made in the following.

It can be learned that the adaptive RU is proposed for the MRU/RU in the 802. 1 1be, to be specific, the station performs transmission on some allocated idle sub-channels, so that a spectrum resource can be used more efficiently.

2. Method for calculating transmit power of a station

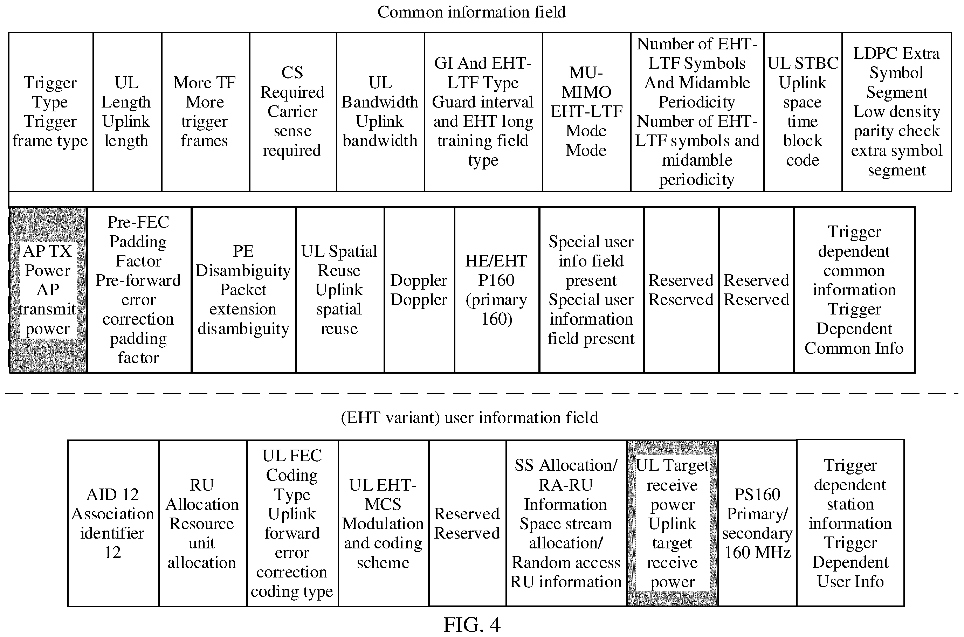

FIG. 4 is a schematic diagram of a power-related subfield in a trigger frame in the 802. 11be. As shown in FIG. 4, the trigger frame in the 802.11be includes but is not limited to a common information field and an (EHT variant) user information field. The common information field includes but is not limited to an AP transmit power (AP Tx power) subfield, and the (EHT variant) user information field includes but is not limited to an uplink target receive power (UL Target Receive Power) subfield. A station may roughly determine an uplink (uplink, UL) transmit power of the station by using the AP transmit power (AP Tx power) subfield and the uplink target receive power (UL Target Receive Power) subfield. A manner is as follows:

$$Tx_{pwr}^{STA} = PL_{DL} + TargetRx_{pwr} \qquad (1\text{-}1)$$

The following describes meanings of parameters in the formula (1-1). $Tx_{pwr}^{STA}$ : transmit power of a STA, measured in decibel-milliwatt (decibel relative to one milliwatt, dBm).
$TargetRx_{pwr}$ : receive power expected by an AP, measured in dBm, and indicated by an uplink target receive power (UL Target Receive Power) subfield in an (EHT variant) user information field of a trigger frame.
$PL_{DL}$: a path loss from the AP to the STA, measured in decibel (decibel, dB).
The STA may calculate the path loss $PL_{DL}$ (in dB) from the AP to the STA by using the following formula (1-2):

$$PL_{DL} = Tx_{pwr}^{AP} - Rx_{pwr} \qquad (1\text{-}2)$$

The following describes meanings of parameters in the formula (1-2). $Tx_{pwr}^{AP}$ : transmit power of an AP, measured in dBm/20 MHz, and indicated by an AP transmit power (AP Tx power) subfield in a common information field of a trigger frame.
$Rx_{pwr}$: receive signal power of the STA, measured in dBm/20 MHz.

Note 1: $Tx_{pwr}^{AP}$ and $Rx_{pwr}$ are measured in dBm/20 MHz. $Tx_{pwr}^{STA}$ and $TargetRx_{pwr}$ are measured in dBm.
Note 2: One STA that uses uplink beamforming should consider a beamforming gain when calculating transmit power. If beamforming is used for a PPDU in which the trigger frame is located, the AP may consider the beamforming gain when setting $Tx_{pwr}^{AP}$ and $TargetRx_{pwr}$ .
Note 3: Transmit power of an EHT TB PPDU sent by the station should further meet minimum transmit power and maximum transmit power limits of the station. These limits are affected by a hardware capability, a supervision requirement, a local maximum transmit power level, a non-802.11 device coexistence requirement, and the like.
It can be learned that the 802.11be proposes the method for calculating the transmit power of the station. However, the method is applicable to a case in which a station performs transmission on all allocated resource units, and is not applicable to a case in which the station performs transmission on an adaptive RU. A size of the adaptive RU is less than or equal to a size of an allocated MRU/RU. Therefore, if the transmit power of the STA is calculated by using the foregoing calculation method, the transmit power of the STA on each subcarrier is increased, and interference may be caused to another WLAN device. Correspondingly, power of a subcarrier actually received by the AP is increased, and mismatches/does not match the receive power expected by the AP, that is, the power of the subcarrier actually received by the AP exceeds a controllable range of the AP. Therefore, in a scenario in which the station transmits the TB PPDU by using the adaptive RU, how to determine transmit power of the station is not resolved.

3. Overlapping basic service set (overlapping basic service set, OBSS)

Overlapping basic service set: One basic service set (basic service set, BSS) and a basic service set of a station operate on a same channel, and the basic service set is (partly or wholly) in a basic service area of the basic service set of the station. Overlapping basic service area is referred to as the overlapping basic service set (overlapping basic service set (OBSS): A basic service set (BSS) operating on the same channel as the station's (STA's) BSS and within (either partly or wholly) its basic service area (BSA)). The basic service area is an area that includes a member of the basic service set, and may include a member of another BSS (basic service area (BSA): The area containing the members of a basic service set (BSS). It might contain members of other BSSs).

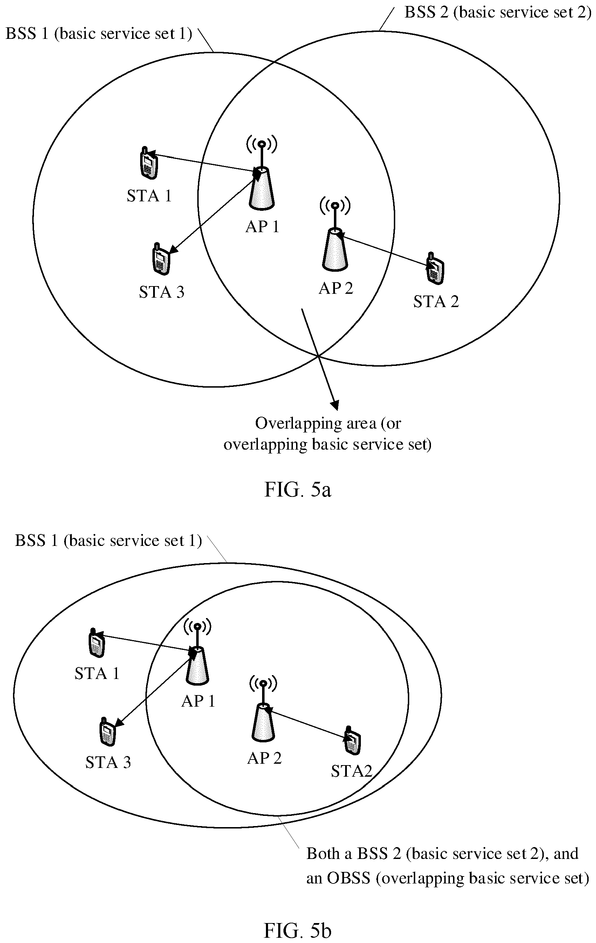

In other words, an overlapping part between a basic service area of one BSS and a basic service area of another BSS is the OBSS. It may be understood that the overlapping herein may mean that a basic service area of one BSS partially overlaps or includes a basic service area of another BSS, to be specific, a basic service area of one BSS is in a basic service area of another BSS. FIG. 5a is a schematic diagram of an OBSS formed by partially overlapping one BSS and another BSS. In FIG. 5a, an AP 1, a STA 1, and a STA 3 belong to a BSS 1, and an AP 2 and a STA 2 belong to a BSS 2. There is an overlapping area between the BSS 1 and the BSS 2, and the AP 1 and the AP 2 are located in the overlapping area between the BSS 1 and the BSS 2. In other words, the AP 1 and the AP 2 are located in an OBSS formed by the BSS 1 and the BSS 2. FIG. 5b is a schematic diagram of an OBSS formed by one BSS including another BSS. In FIG. 5b, an AP 1, a STA 1, and a STA 3 belong to a BSS 1, and an AP 2 and a STA 2 belong to a BSS 2. The BSS 1 includes the BSS 2, and the AP 1 and the AP 2 are located in an overlapping area (namely, a basic service area of the BSS 2 in FIG. 5b) between the BSS 1 and the BSS 2. In other words, the AP 1 and the AP 2 are located in an OBSS formed by the BSS 1 and the BSS 2.

Optionally, a WLAN device located in a same OBSS may receive information from two BSSs. FIG. 5a is used as an example. When the AP 1 and STA 1 located in the same BSS perform data transmission, the AP 2 located in the other BSS may receive information sent by the AP 1 and the STA 1, or the AP 2 may further receive information sent by the STA 3. In this case, the AP 2 may adaptively adjust, based on a spatial reuse parameter transferred by the AP 1, power at which the AP 2 sends a PPDU to the STA 2, to implement simultaneous transmission in the OBSS. Similarly, when the AP 2 and the STA 2 in the same BSS perform data transmission, the AP 1 in the other BSS may receive information sent by the AP 2. Alternatively, the AP 1 may adaptively adjust, based on a spatial reuse parameter transferred by the AP 2, power at which the AP 1 sends a PPDU to the STA 1 and/or the STA 3, to implement simultaneous transmission in the OBSS.

4. Method for calculating transmit power of a parameterized spatial reuse transmission (Parameterized Spatial Reuse Transmission, PSRT) PPDU

As deployment density of WLAN devices becomes higher, it is more common that one basic service set overlaps another BSS, that is, an overlapping basic service set (Overlapping BSS, OBSS) is more common. In an OBSS scenario, WLAN devices cannot perform transmission simultaneously due to interference. To resolve this problem, the 802.11ax proposes a spatial reuse (spatial reuse) method based on parameterized spatial reuse (Parameterized Spatial Reuse, PSR).

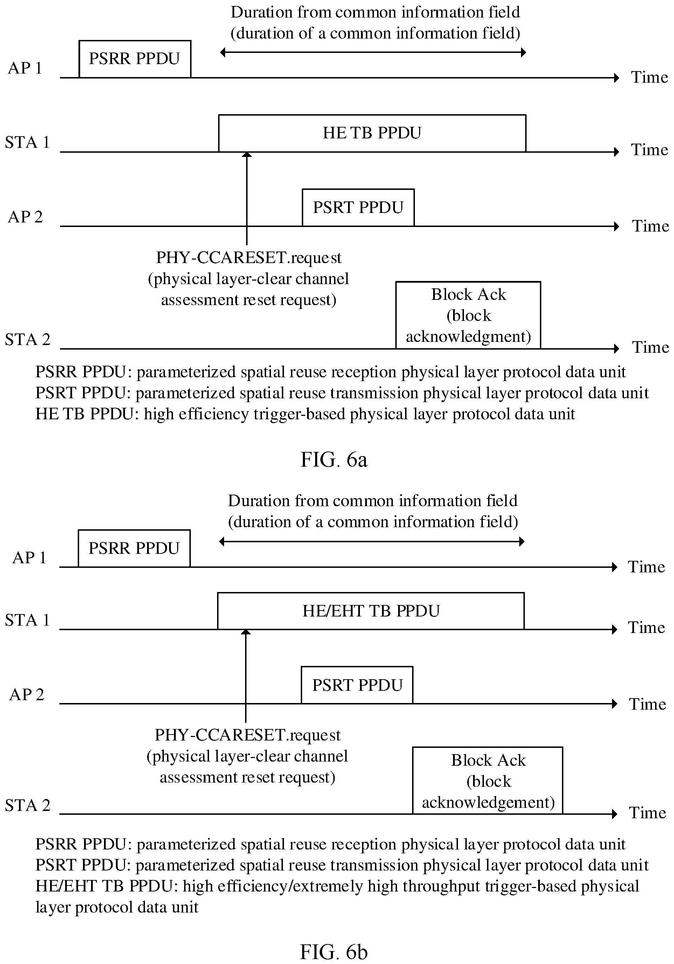

FIG. 6a is a schematic flowchart of a spatial reuse method based on parameterized spatial reuse in the 802.11ax. It is assumed that an AP 1 and an AP 2 are located in a same OBSS, the AP 1 and a STA 1 belong to a BSS 1, and the AP 2 and a STA 2 belong to a BSS 2. As shown in FIG. 6a, the AP 1 first sends one parameterized spatial reuse reception (Parameterized Spatial Reuse Reception, PSRR) PPDU that includes a trigger frame to the STA 1. A common information field of the trigger frame includes an uplink spatial reuse (UL Spatial Reuse) field. The uplink spatial reuse field may include four uplink parameterized spatial reuse (Uplink Parameterized Spatial Reuse, UL PSR) fields with a length of 4 bits, or may be referred to as an uplink spatial reuse parameter (Spatial Reuse Parameter, UL SRP) fields, indicating a sum of transmit power of the AP and maximum acceptable interference power of the AP. The four UL PSR fields included in the uplink spatial reuse field are a UL PSR1 field, a UL PSR2 field, a UL PSR3 field, and a UL PSR4 field. It should be understood that, in this application, the UL PSR, the UL SRP, and the spatial reuse (Spatial Reuse) may be used interchangeably, in other words, the SRP, the PSR, and the spatial reuse may be used interchangeably.

In different bandwidths, values of the UL PSR1 field to the UL PSR4 field are set as follows: When a bandwidth is 20 MHz, UL PSR1 = UL PSR2 = UL PSR3 = UL PSR4, indicating a value of a UL PSR field of the 20 MHz bandwidth. When a bandwidth is 40 MHz, UL PSR1 = UL PSR3, indicating a value of a UL PSR field of a first 20 MHz sub-channel (namely, a 20 MHz low sub-channel) in an ascending order of frequencies over the 40 MHz bandwidth. UL PSR2 = UL PSR4, indicating a value of a UL PSR field of a second 20 MHz sub-channel (namely, a 20 MHz high sub-channel) in an ascending order of frequencies over the 40 MHz bandwidth. To avoid confusion caused by channel allocation, when a bandwidth frequency is 2.4 GHz, UL PSR1 = UL PSR2. When a bandwidth is 80 MHz, the four UL PSR fields respectively indicate values of UL PSR fields of four 20 MHz sub-channels. When a bandwidth is 160 MHz, the four UL PSR fields respectively indicate values of UL PSR fields of four 40 MHz sub-channels, and values of UL PSR fields of two 20 MHz sub-channels in any 40 MHz sub-channel are the same.

The bandwidth (Bandwidth, BW) may be indicated by using an uplink bandwidth (UL BW) field in the common information field of the trigger frame. The value of the UL PSR field is determined by the AP 1, and is equal to the sum of the transmit power of the AP 1 and the maximum acceptable interference power of the AP 1.

Then, the STA 1 copies the uplink spatial reuse field in the received trigger frame to a high efficiency signal field A (high efficiency signal field A, HE-SIG-A field) of a to-be-sent HE TB PPDU, and then sends the HE TB PPDU. The HE-SIG-A field includes four PSR fields: a PSR1 field, a PSR2 field, a PSR3 field, and a PSR4 field, which are in a one-to-one correspondence with the four UL PSR fields in the trigger frame. For example, a value of the PSR1 field in the HE-SIG-A field is copied from a value of the UL PSR1 field in the trigger frame, a value of the PSR2 field in the HE-SIG-A field is copied from a value of the UL PSR2 field in the trigger frame, and a value of the PSR3 field in the HE-SIG-A field is copied from a value of the UL PSR3 field in the trigger frame, a value of the PSR4 field in the HE-SIG-A field is copied from a value of the UL PSR4 field in the trigger frame.

Because the AP 1 and the AP 2 are located in the OBSS formed by the BSS 1 and the BSS 2, when the AP 1 sends the trigger frame, the AP 2 may also receive the trigger frame, and when the STA 1 sends the HE TB PPDU, the AP may also receive the HE TB PPDU. Therefore, after the AP receives the PSRR PPDU that includes the trigger frame, optionally, after the AP 2 further receives the HE TB PPDU (determining that the STA 1 actually sends the HE TB PPDU, which may be ignored in actual implementation), the AP 2 calculates, based on receive power (namely, a received power level, a Received Power Level, RPL) of the PSRR PPDU, the values respectively indicated by the four UL PSR fields, and/or the values respectively indicated by the four PSR fields in the HE TB PPDU, the transmit power of the parameterized spatial reuse transmission (Parameterized Spatial Reuse Transmission, PSRT) PPDU. After detecting that the HE TB PPDU is sent, the AP 2 sends the PSRT PPDU based on the calculated power. Correspondingly, the STA 2 receives the PSRT PPDU, and returns, to the AP 2, a response frame in response to the PSRT PPDU, for example, a block acknowledgment (block acknowledge) frame.

Optionally, the transmit power of the PSRT PPDU meets the following formula (1 to 3):

$$\text{Transmit power of a PSRT PPDU (sent by an AP 2)} \leq \text{PSR} - \text{RPL} \qquad (1\text{-}3)$$

PSR in the formula (1-3) is a value indicated by a UL PSR field or a PSR field. In the formula (1-3), RPL is combined transmit power at all receive antenna connectors, over a PSRR PPDU bandwidth, during a non-HE portion or non-EHT portion of a triggering PPDU (a PPDU including a trigger frame) (RPL is the combined transmit power at the receive antenna connector, over the PSRR PPDU bandwidth, during the non-HE portion of the HE PPDU preamble of the triggering PPDU, averaged over all antennas used to receive the PPDU). Herein, the transmit power of the PSRT PPDU, the PSR, and the RPL in the formula (1-3) may be normalized to 20 MHz for calculation, or may be calculated based on a total bandwidth (namely, the PSRR PPDU bandwidth). This is not limited in this application.

Optionally, the foregoing RPL may be understood as power at which the AP 2 receives the PPDU sent by the AP 1, and the foregoing PSR value is determined by the AP 1, and is equal to the sum of the transmit power of the AP 1 and the maximum acceptable interference power of the AP 1. Therefore, the foregoing formula (1-3) may be equivalent to the following formula (1-4):

$$\text{Transmit power of an AP 2} \leq \text{transmit power of an AP 1} + \text{maximum acceptable interference power of the AP 1} - \text{power at which the AP 2 receives a PPDU sent by the AP 1} \quad (1\text{-}4)$$

The (transmit power of an AP 1 - power at which the AP 2 receives a PPDU sent by the AP 1) in the formula (1-4) is equal to a path loss (pathloss) between the AP 1 and the AP 2. Therefore, the foregoing formula (1-4) may be equivalent to the following formula (1-5) or the following formula (1-6):

$$\text{Transmit power of an AP 2} \leq \text{maximum acceptable interference power of an AP 1} + \text{path loss between the AP 1 and the AP 2} \qquad (1\text{-}5)$$

$$\text{Transmit power of an AP 2} - \text{path loss between an AP 1 and the AP 2} \leq \text{maximum acceptable interference power of the AP 1} \qquad (1\text{-}6)$$

The (transmit power of an AP 2 - path loss between an AP 1 and the AP 2) indicates interference of the AP 2 to the AP 1. Therefore, any one of the foregoing formula (1-3) to the foregoing formula (1-6) may be equivalent to the following formula (1-7):

$$\text{Interference of an AP 2 to an AP 1} \leq \text{maximum acceptable interference power of the}$$

$$\text{AP 1} \tag{1-7}$$

Certainly, the 802.11be also proposes a spatial reuse method based on parameterized spatial reuse. A procedure of the spatial reuse method is similar to that of the 802.11ax, and details are not described herein again. FIG. 6b is a schematic flowchart of a spatial reuse method based on parameterized spatial reuse in the 802.11be. As shown in FIG. 6b, a difference between the spatial reuse method based on parameterized spatial reuse in the 802.11be and the spatial reuse method based on parameterized spatial reuse in the 802.11ax lies in: (1) A PSRR PPDU carrying a trigger frame may schedule an HE TB PPDU and/or an EHT TB PPDU. (2) An AP 2 may perform spatial reuse based on the HE TB PPDU and/or the EHT TB PPDU.

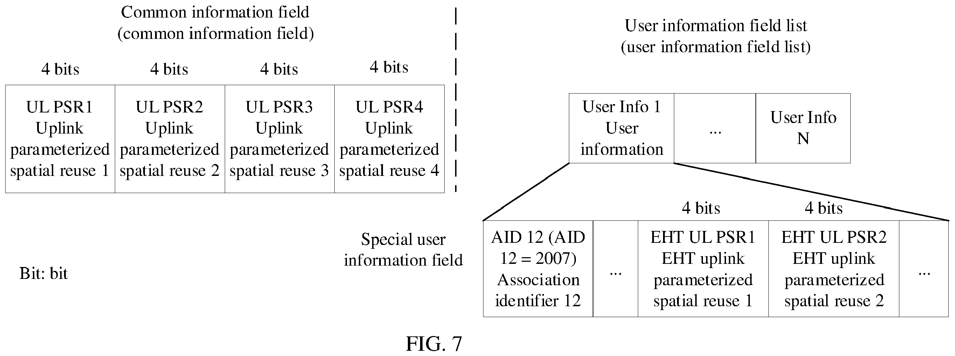

Optionally, FIG. 7 is a schematic diagram of a UL PSR field in a trigger frame in the 802.11be. As shown in FIG. 7, a common information field of the trigger frame in the 802.11be includes four UL PSR fields used for an HE TB PPDU. A user information list of the trigger frame in the 802.11be includes one special user information field, and a value of an association identifier 12 subfield of the special user information field is one predetermined value (for example, 2007), which indicates that the special user information field is used as one extension of the common information field. The special user information field includes two UL PSR fields used for an EHT TB PPDU: an EHT UL PSR1 field and an EHT UL PSR2 field.

In different bandwidths, values of the EHT UL PSR1 field and the EHT UL PSR2 field are set as follows: When a bandwidth is 20 MHz, EHT UL PSR1 = EHT UL PSR2, indicating the value of the EHT UL PSR field of the 20 MHz bandwidth. When a bandwidth is 40 MHz, EHT UL PSR1 indicates a value of an EHT UL PSR field of a first 20 MHz sub-channel (namely, a 20 MHz low sub-channel) in an ascending order of frequencies over the 40 MHz bandwidth. EHT UL PSR2 indicates a value of an EHT UL PSR field of a second 20 MHz sub-channel (namely, a 20 MHz high sub-channel) in an ascending order of frequencies over the 40 MHz bandwidth. To avoid confusion caused by channel allocation, when a bandwidth frequency is 2.4 GHz, EHT UL PSR1 = EHT UL PSR2. When a bandwidth is 80 MHz, the two EHT UL PSR fields respectively indicate values of EHT UL PSR fields of two 40 MHz sub-channels, and values of EHT UL PSR fields of two 20 MHz sub-channels in any 40 MHz sub-channel are the same. When a bandwidth is 160 MHz, the two EHT UL PSR fields respectively indicate values of EHT UL PSR fields of four 40 MHz sub-channels, and values of EHT UL PSR fields of two 20 MHz sub-channels in any 40 MHz sub-channel are the same. When a bandwidth is 160 MHz, the two EHT UL PSR fields respectively indicate values of EHT UL PSR fields of two 80 MHz sub-channels in an ascending order of frequencies, and values of EHT UL PSR fields of four 20 MHz sub-channels in any 80 MHz sub-channel are the same. When a bandwidth is 320 MHz, the two EHT UL PSR fields respectively indicate values of EHT UL PSR fields of two 160 MHz sub-channels, and values of EHT UL PSR fields of eight 20 MHz sub-channels in any 160 MHz sub-channel are the same.

Optionally, a U-SIG of the EHT TB PPDU includes two EHT PSR fields that are in a one-to-one correspondence with the two EHT UL PSR fields in the trigger frame. For example, a value of an EHT PSR1 field in the U-SIG is copied from a value of the EHT UL PSR1 field in the trigger frame, and a value of an EHT PSR2 field in the U-SIG is copied from a value of the EHT UL PSR2 field in the trigger frame.

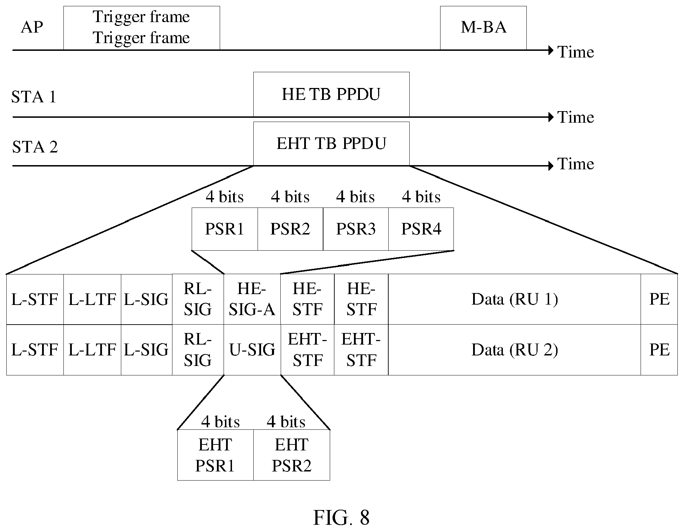

Optionally, FIG. 8 is a schematic diagram of simultaneously scheduling HE TB PPDU and EHT TB PPDU transmission. As shown in FIG. 8, an AP sends a trigger frame. The trigger frame is used to simultaneously schedule a station (for example, a STA 1 in FIG. 8) supporting the HE protocol and a station (for example, a STA 2 in FIG. 8) supporting the EHT protocol to perform uplink data transmission. After the STA 1 and the STA 2 receive the trigger frame, the STA 1 copies values of four UL PSR fields in the trigger frame to four PSR fields in the HE TB PPDU one by one, and then sends the HE TB PPDU; and the STA 2 copies values of two EHT UL PSR fields in the trigger frame to two EHT PSR fields in the EHT TB PPDU one by one, and then sends the EHT TB PPDU. After receiving an uplink multi-user PPDU, the AP returns a multi-station block acknowledgment (Multiple STA Block Acknowledgment, M-BA) frame at a time interval (for example, a short interframe space), to acknowledge that the AP receives a PPDU sent by one or more stations.

A correspondence between a value and a meaning of the UL PSR field/PSR field/EHT UL PSR field/EHT PSR field in this application may be shown in the following Table 1. It should be understood that, a unit of the PSR shown in Table 1 is only an example. In actual application, the PSR may have no unit, or a unit of the PSR is dBm, or a unit of the PSR is $dBm^2$, or a unit of the PSR is dB. This is not limited in this application. In another possibility, the PSR is normalized to 20 MHz, and a unit of the PSR may be dBm/20 MHz, $dBm^2$/20 MHz, dB/20 MHz, or the like.

**Table 1: Interpretation of a spatial reuse field in a TB PPDU (applicable to the HE protocol/EHT protocol)**

| Value | Meaning |
|---|---|
| 0 | PSR_DISALLOW<br>PSR spatial reuse is prohibited |
| 1 | PSR = -80 dBm |
| 2 | PSR = -74 dBm |
| 3 | PSR = -68 dBm |
| 4 | PSR = -62 dBm |
| 5 | PSR = -56 dBm |
| 6 | PSR = -50 dBm |
| 7 | PSR = -47 dBm |
| 8 | PSR = -44 dBm |
| 9 | PSR = -41 dBm |
| 10 | PSR = -38 dBm |
| 11 | PSR = -35 dBm |
| 12 | PSR = -32 dBm |
| 13 | PSR = -29 dBm |
| 14 | PSR >_ -26 dBm |
| 15 | PSR_AND_NON-SRG_OBSS-PD_PROHIBITED<br>PSR and non-SR group (Group) overlapping basic service set (Overlapping Basic Service Set, OBSS) packet detection (Packet Detection)-based spatial reuse is prohibited. |

In conclusion, it can be learned that in an OBSS scenario, if the STA sends the EHT TB PPDU by using an adaptive RU, and a size of the adaptive RU is less than a size of an MRU/RU allocated to the STA, transmit power of sending a PSRT PDDU by the AP needs to be determined.

This application provides a method for determining transmit power in a wireless local area network, to resolve a transmit power problem of the station in a scenario in which the station performs transmission by using the adaptive RU, so that power of receiving a TB PPDU by the AP is within a controllable range of the AP. This application further provides a method for determining transmit power based on spatial reuse, to resolve a transmit power problem of sending a PSRT PPDU by an access point when a station performs transmission by using an adaptive RU in an OBSS and spatial reuse scenario, to increase the transmit power of the access point, so that the access point obtains a larger gain. This application further provides a method for determining a spatial reuse parameter field in a PPDU, to resolve a problem of how to design an EHT PSR field to resolve a transmit power problem of a PSRT PPDU when a station performs transmission by using an adaptive RU in an OBSS and spatial reuse scenario, to increase transmit power of an access point, so that the access point obtains a larger gain.

The following describes in detail the technical solutions provided in this application with reference to more accompanying drawings.

The technical solutions provided in this application are described by using a plurality of embodiments, including Embodiment 1, Embodiment 2, Embodiment 3, and Embodiment 4. Embodiment 1 describes changing a transmit power calculation manner of a station when the station transmits a TB PPDU by using an adaptive RU, to resolve a transmit power problem of the station. Embodiment 2 describes changing a meaning of a corresponding subfield in a trigger frame, to reduce impact on transmit power of a station when the station transmits a TB PPDU by using an adaptive RU. Embodiment 3 describes changing a spatial reuse reading rule by a second access point by obtaining an adaptive RU used by a station to transmit a TB PPDU in an OBSS scenario, to resolve a transmit power problem of a PSRT PPDU. Embodiment 4 describes directly changing a value of an EHT PSR field in a TB PPDU with reference to a related indication of an adaptive RU, to indirectly resolve a transmit power problem of a PSRT PPDU in an OBSS scenario. It should be understood that the technical solutions described in Embodiment 1 to Embodiment 4 of this application may be combined to form a new embodiment, and parts that have a same or similar concept or solution may be mutually referenced or combined. The following separately describes the embodiments in detail.

Optionally, the station in this application may be any STA shown in FIG. 1, for example, a STA 201. A first access point in this application may be any AP shown in FIG. 1, for example, an AP 101. The second access point in this application may be an AP 102 shown in FIG. 1. The station, the first access point, and the second access point in this application all support the 802.11be protocol, and may further support another WLAN communication protocol such as the 802.11ax and the 802.11ac. It should be understood that the station, the first access point, and the second access point in this application may further support a next-generation protocol of the 802.11be. In other words, methods provided in this application are applicable to the 802.11be protocol and the next-generation protocol of the 802. 1 1be.

**Embodiment 1**

Embodiment 1 of this application mainly describes a transmit power design of a station when the station transmits a TB PPDU by using an adaptive RU.

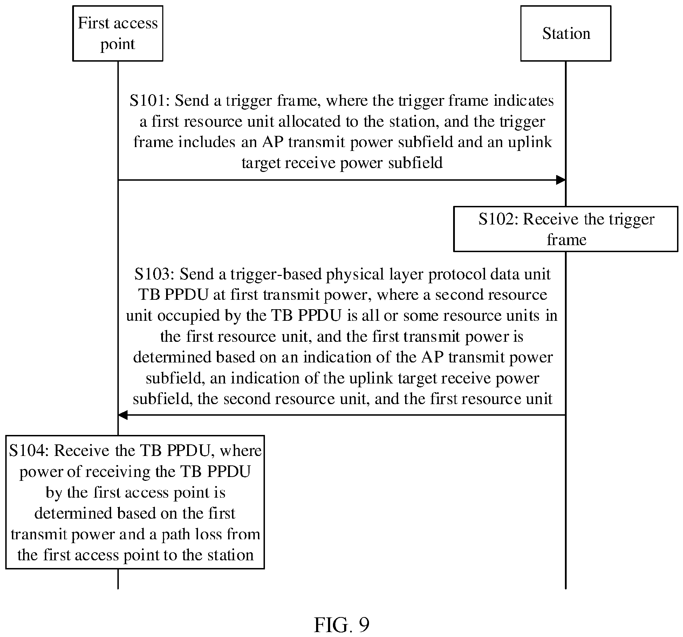

FIG. 9 is a schematic flowchart of a method for determining transmit power in a wireless local area network according to an embodiment of this application. As shown in FIG. 9, the method for determining the transmit power in the wireless local area network includes but is not limited to the following steps:

> S101: A first access point sends a trigger frame, where the trigger frame indicates a first resource unit allocated to a station, and the trigger frame includes an AP transmit power subfield and an uplink target receive power subfield.
> S102: The station receives the trigger frame.
> S103: The station sends a trigger-based physical layer protocol data unit TB PPDU at first transmit power, where a second resource unit occupied by the TB PPDU is all or some resource units in the first resource unit, and the first transmit power is determined based on an indication of the AP transmit power subfield, an indication of the uplink target receive power subfield, the second resource unit, and the first resource unit.
> S104: The first access point receives the TB PPDU, where power of receiving the TB PPDU by the first access point is determined based on the first transmit power and a path loss from the first access point to the station.

Optionally, the trigger frame is a trigger frame in the 802. 11be, and includes but is not limited to a common information field and a user information list field. As shown in FIG. 4, the common information field includes but is not limited to the AP transmit power subfield that indicates transmit power of an AP. The common information field includes common information to be read by all STAs (the STA herein includes at least one of an HE STA and an EHT STA). The EHT STA in this specification is a station that supports the EHT protocol, and is compatible with the HE and earlier protocols. In some scenarios and embodiments, the HE STA in this application supports up to the HE protocol, but does not support a future Wi-Fi protocol, for example, the EHT protocol. However, it should not be understood that in this application, all HE STAs are limited to being unable to support the future Wi-Fi protocol. The user information list field includes but is not limited to one special user information field (a value of an association identifier 12 subfield is equal to 2007), and one or more EHT variant user information fields. The special user information field includes common information to be read by all EHT STAs. As shown in FIG. 4, one EHT variant user information field includes information to be read by one EHT STA. One EHT variant user information field includes but is not limited to an association identifier 12 (association identification 12, AID 12) subfield, an RU allocation (RU allocation) subfield, and an uplink target receive power subfield. The uplink target receive power subfield indicates receive power expected by an AP. The AID 12 subfield indicates an association identifier of a STA. The RU allocation subfield indicates a specific location of a resource unit allocated to the STA (namely, the STA indicated by the AID 12 subfield). In other words, the RU allocation subfield in the trigger frame indicates the first resource unit allocated to the station. It should be understood that the first resource unit in this specification may be in an MRU/RU format supported by the 802.11be protocol or a next-generation protocol of the 802.11be. For details, refer to related descriptions in a related protocol. Details are not described herein.

Optionally, the first access point sends the trigger frame, where the trigger frame is used to trigger the station to send the TB PPDU, and the trigger frame further indicates the first resource unit allocated to the station. After receiving the trigger frame, the station may select, from the first resource unit based on a channel busy or idle state detected through sensing on the first resource unit, the second resource unit on which the TB PPDU is actually transmitted. In other words, the second resource unit is all or some resource units in the first resource unit. The station may determine transmit power of the station based on the first resource unit, the second resource unit, the indication of the AP transmit power subfield in the trigger frame, and the indication of the uplink target receive power subfield in the trigger frame (for ease of description, the transmit power of the station is referred to as the first transmit power in this embodiment of this application). The station sends the TB PPDU on the second resource unit at the determined first transmit power, for example, sends an EHT TB PPDU. Correspondingly, the first access point receives the TB PPDU, and returns an acknowledgment frame to the station. Power of receiving the TB PPDU by the first access point is determined based on the first transmit power and the path loss from the first access point to the station. For example, the power of receiving the TB PPDU by the first access point is equal to a difference between the first transmit power and the path loss from the first access point to the station. It should be understood that the second resource unit in this specification may be in an MRU/RU format supported by the 802.11be protocol or a next-generation protocol of the 802. 1 1be. For details, refer to related descriptions in a related protocol. Details are not described herein.

The following describes in detail a specific implementation of the transmit power of the station, namely, the first transmit power. The following several implementations may be combined to form a new implementation, and parts that are related to a same or similar concept or solution may be mutually referenced or combined.

Optionally, the first transmit power may be determined based on a value indicated by the AP transmit power subfield, a value indicated by the uplink target receive power subfield, a size of the second resource unit, and a size of the first resource unit. Specifically, if the second resource unit is some resource units in the first resource unit, that is, a size/size of a resource unit (namely, the second resource unit) selected by the station to actually transmit the TB PPDU is inconsistent with a size/size of the resource unit (namely, the first resource unit) allocated by the first access point to the station, the first transmit power is determined based on the indication of the AP transmit power subfield, the indication of the uplink target receive power subfield, and a ratio of the size of the second resource unit to the size of the first resource unit.

Implementation 1: The size/size of the first resource unit is determined based on a total quantity of subcarriers included in the first resource unit, and the size/size of the second resource unit is determined based on a total quantity of subcarriers included in the second resource unit. The subcarrier in this embodiment of this application may be one or more of the following: a data subcarrier, a pilot subcarrier, a direct current subcarrier, a null subcarrier, and a guard subcarrier. For example, the size/size of the first resource unit is determined based on a total quantity of data subcarriers included in the first resource unit, and the size/size of the second resource unit is determined based on a total quantity of data subcarriers included in the second resource unit. For example, the size/size of the first resource unit is determined based on a sum of data subcarriers and pilot subcarriers included in the first resource unit, and the size/size of the second resource unit is determined based on a sum of data subcarriers and pilot subcarriers included in the second resource unit.

Specifically, a calculation manner (or a determining manner) of the first transmit power (namely, the transmit power of the station) may be represented by the following formula (2-1) and formula (2-2):

$$Tx_{pwr}^{STA} = PL_{DL} + TargetRx_{pwr} - 10\log_{10}(\frac{RU\_SIZE_{allocated}}{RU\_SIZE_{new}}) \qquad (2\text{-}1)$$

$$Tx_{pwr}^{STA} = PL_{DL} \times TargetRx_{pwr} \times \frac{RU\_SIZE_{new}}{RU\_SIZE_{allocated}} \qquad (2\text{-}2)$$

In the foregoing formula (2-1) and the foregoing formula (2-2), $Tx_{pwr}^{STA}$ indicates transmit power of a station, namely, the foregoing first transmit power. $TargetRx_{pwr}$ indicates receive power expected by an AP, and a value of $TargetRx_{pwr}$ is a value indicated by an uplink target receive power subfield. $RU\ SIZE_{allocated}$ indicates a size/size of a first resource unit allocated to the station. $RU\_SIZE_{new}$ indicates a size/size of a second resource unit occupied by a TB PPDU. $PL_{DL}$ indicates a path loss from a first access point to the station. $PL_{DL}$ may be determined based on an indication of an AP transmit power subfield and receive power of the station. A calculation formula is shown in the foregoing formula (1-2). Details are not described herein again.

It should be understood that the foregoing formula (2-1) is a representation manner of a logarithm domain, and the foregoing formula (2-2) is a representation manner of a linear domain.

Optionally, for the foregoing formula (2-1), units of $Tx_{pwr}^{STA}$ and $TargetRx_{pwr}$ may be dBm, and units of

$$10\log_{10}(\frac{RU\_SIZE_{allocated}}{RU\_SIZE_{new}})$$ and $PL_{DL}$ may be dB.

Optionally, for the foregoing formula (2-2), units of $Tx_{pwr}^{STA}$ and $TargetRx_{pwr}$ may be dBm.

Optionally, for the foregoing formula (2-1), a ratio of $RU\ SIZE_{allocated}$ to $RU\_SIZE_{new}$ may be rounded. Rounding herein includes one of rounding up, rounding down, and rounding off. Similarly, for the foregoing formula (2-2), a ratio of $RU\_SIZE_{new}$ to $RU\_SIZE_{allocated}$ may be rounded. Rounding herein includes one of rounding up, rounding down, and rounding off. For example, a rounded-up value of 1.7 is 2, a rounded-down value of 1.7 is 1, and a rounded-off value of 1.7 is 2.

Optionally, the foregoing formula (2-1) and the foregoing formula (2-2) may further have a plurality of variations, including multiplying one or more terms on the right of the equation by one coefficient, adding one coefficient to one or more terms on the right of the equation, or the like. In an example, one constant C is added to /subtracted from the right

$$10\log_{10}(\frac{RU\_SIZE_{allocated}}{RU\_SIZE_{new}})$$

of the equation in the formula (2-1), and/or ⎯⎯⎯⎯⎯⎯⎯⎯⎯⎯⎯⎯⎯⎯⎯⎯ in the formula (2-1) is multiplied by one positive integer A, and/or $RU\_SIZE_{allocated}/RU\_SIZE_{new}$ in the formula (2-1) is multiplied by one positive integer B. In another example, the right side of the equation in the formula (2-2) is multiplied/divided by one constant C, and/or $RU\_SIZE_{new}/RU\_SIZE_{allocated}$ in the formula (2-2) is raised to a positive integer power A, and/or $RU\_SIZE_{new}/RU\_SIZE_{allocated}$ in the formula (2-2) is multiplied by one positive integer B. It should be understood that the foregoing variations are only examples for describing possible variations. In actual application, there may be another variation, which is not enumerated in this embodiment of this application.

Optionally, the size/size of the first resource unit may be the total quantity of subcarriers included in the first resource unit, and the size/size of the second resource unit may be the total quantity of subcarriers included in the second resource unit. In an example, assuming that the first resource unit is a 2×996-tone RU, the total quantity of subcarriers (namely, $RU\_SIZE_{allocated}$) included in the first resource unit is 1992 (in other words, 2 × 996 = 1992). Assuming that the second resource unit is a 996-tone RU, the total quantity of subcarriers (namely, $RU\_SIZE_{new}$) included in the second resource unit is 996. In another example, assuming that the first resource unit is a 3×996-tone MRU, the total quantity of subcarriers (namely, $RU\_SIZE_{allocated}$) included in the first resource unit is 2988 (in other words, 3 × 996 = 2988). Assuming that the second resource unit is a 2×996-tone RU, the total quantity of subcarriers (namely, $RU\_SIZE_{new}$) included in the second resource unit is 1992 (in other words, 2 × 996 = 1992). In another example, assuming that the first resource unit is a 4×996-tone MRU, the total quantity of subcarriers (namely, $RU\_SIZE_{allocated}$) included in the first resource unit is 3984 (in other words, 4 × 996 = 3984). Assuming that the second resource unit is a 3×996-tone MRU, the total quantity of subcarriers (namely, $RU\_SIZE_{new}$) included in the second resource unit is 2988 (in other words, 3 × 996 = 2988).

Optionally, the size or size of the first resource unit may be a value obtained after mapping is performed on the total quantity of subcarriers included in the first resource unit, and the size or size of the second resource unit may be a value obtained after mapping is performed on the total quantity of subcarriers included in the second resource unit. In an example, it is assumed that a mapping relationship is that 242 subcarriers are mapped to 1, 484 subcarriers are mapped to 2, 996 subcarriers are mapped to 4, and so on. Assuming that the first resource unit is a 2×996-tone RU, the size or size (namely, $RU\_SIZE_{allocated}$) of the first resource unit is 8 (2 × 4 = 8). Assuming that the second resource unit is a 996-tone RU, the size or size (namely, $RU\_SIZE_{new}$) of the second resource unit is 4.

Optionally, the size or size of the first resource unit may alternatively be a bandwidth of the first resource unit, and the size or size of the second resource unit may alternatively be a bandwidth of the second resource unit. Herein, the bandwidth of the first resource unit may be a contiguous bandwidth, or may be an actually occupied bandwidth. In an example, it is assumed that the first resource unit is a 996+484-tone RU, a 996-tone RU included in the 996+484-tone RU is located on a first 80 MHz, and a 484-tone RU is located on a second 40 MHz of a second 80 MHz. In this case, a contiguous bandwidth of the 996+484-tone RU is 160 MHz (80 MHz+80 MHz), and an actually occupied bandwidth is 120 MHz (80 MHz+40 MHz). Assuming that the second resource unit is a 996-tone RU, both a contiguous bandwidth and an actually occupied bandwidth of the 996-tone RU are 80 MHz.

It should be understood that, if the second resource unit is all resource units in the first resource unit, in other words, the size/size of the resource unit (namely, the second resource unit) selected by the station to actually transmit the TB PPDU is the same as the size/size of the resource unit (namely, the first resource unit) allocated by the first access point to the station, the transmit power (namely, the first transmit power) of the station may also be calculated by using the foregoing formula (2-1) or the foregoing formula (2-2). However, in this case, $RU\_SIZE_{allocated}$ is equal to $RU\_SIZE_{new}$.

Implementation 2: The size of the first resource unit is determined based on a quantity of first bandwidth sizes included in a bandwidth of the first resource unit, and the size of the second resource unit is determined based on a quantity of first bandwidth sizes included in a bandwidth of the second resource unit. The quantity of first bandwidth sizes included in the bandwidth of the first resource unit may be understood as a quantity of bandwidths Y occupied by the originally allocated RU/MRU, in other words, a quantity of bandwidths Y occupied by the RU/MRU allocated by the first access point to the station. A quantity of first bandwidth sizes included in the bandwidth of the second resource unit may be understood as a quantity of bandwidths Y occupied by a newly used RU/MRU, namely, a quantity of bandwidths Y occupied by an RU/MRU actually used by the station to transmit the TB PPDU. Each of the first bandwidth size and Y indicates a bandwidth granularity, and may be any one of the following: 20 MHz, 40 MHz, 80 MHz, 160 MHz, and 320 MHz.

Specifically, a calculation manner (or a determining manner) of the first transmit power (namely, the transmit power of the station) may be represented by the following formula (2-3) and formula (2-4):

$$Tx_{pwr}^{STA} = PL_{DL} + TargetRx_{pwr} - 10\log_{10}(\frac{RU\_BW\_Number_{allocated}}{RU\_BW\_Number_{new}}) \qquad (2\text{-}3)$$

$$Tx_{pwr}^{STA} = (PL_{DL} \times TargetRx_{pwr}) \times \frac{RU\_BW\_Number_{new}}{RU\_BW\_Number_{allocated}} \qquad (2\text{-}4)$$

In the foregoing formula (2-3) and the foregoing formula (2-4), $Tx_{pwr}^{STA}$ indicates transmit power of a station, namely, the foregoing first transmit power. $TargetRx_{pwr}$ indicates receive power expected by an AP, and a value of $TargetRx_{pwr}$ is a value indicated by an uplink target receive power subfield. $RU\_BW\_Number_{allocated}$ indicates a quantity of bandwidths of a first size included in the bandwidth of the first resource unit. $RU\_BW\_Number_{new}$ indicates a quantity of bandwidths of a first size included in the bandwidth of the second resource unit. $PL_{DL}$ indicates a path loss from a first access point to the station. $PL_{DL}$ may be determined based on an indication of an AP transmit power subfield and receive power of the station. A calculation formula is shown in the foregoing formula (1-2). Details are not described herein again.

It should be understood that the foregoing formula (2-3) is a representation manner of a logarithm domain, and the foregoing formula (2-4) is a representation manner of a linear domain.

Optionally, for the foregoing formula (2-3), units of $Tx_{pwr}^{STA}$ and $TargetRx_{pwr}$ may be dBm, and units of $10\log_{10}(\frac{RU\_BW\_Number_{allocated}}{RU\_BW\_Number_{new}})$ and $PL_{DL}$ may be dB.

Optionally, for the foregoing formula (2-4), units of $Tx_{pwr}^{STA}$ and $TargetRx_{pwr}$ may be dBm.

Optionally, for the foregoing formula (2-3), a ratio of $RU\_BW\_Number_{allocated}$ to $RU\_BW\_Number_{new}$ may be rounded. Rounding herein includes one of rounding up, rounding down, and rounding off. Similarly, for the foregoing formula (2-4), a ratio of $RU\_BW\_Number_{new}$ to $RU\_BW\_Number_{allocated}$ may be rounded. Rounding herein includes one of rounding up, rounding down, and rounding off.

Optionally, the foregoing formula (2-3) and the foregoing formula (2-4) may further have a plurality of variations, including multiplying one or more terms on the right of the equation by one coefficient, adding one coefficient to one or more terms on the right of the equation, or the like. Refer to the variation in implementation 1, and details are not described herein again.

Optionally, the size/size of the first resource unit may be a quantity of first bandwidth sizes included in the bandwidth of the first resource unit, and the size/size of the second resource unit may be a quantity of first bandwidth sizes included in the bandwidth of the second resource unit.

Optionally, the bandwidth of the first resource unit is from a lowest frequency of the first resource unit to a highest frequency of the first resource unit, and the bandwidth of the second resource unit is from a lowest frequency of the second resource unit to a highest frequency of the second resource unit. In other words, the bandwidths of the first resource unit and the second resource unit are counted based on continuous occupancy. The first resource unit is used as an example. It is assumed that the first resource unit is a 996+484-tone RU, a 996-tone RU included in the 996+484-tone RU is located on a first 80 MHz, and a 484-tone RU is located on a second 40 MHz of a second 80 MHz. In this case, a bandwidth of the 996+484-tone RU is 160 MHz (80 MHz+80 MHz). Assuming that the first bandwidth size is 40 MHz, a quantity of bandwidths (namely, $RU\_BW\_Number_{allocated}$) of the first bandwidth size (namely, 40 MHz) included in the bandwidth (namely, 160 MHz) of the first resource unit is 4.

Optionally, the bandwidth of the first resource unit is a sum of bandwidths occupied by one or more resource units included in the first resource unit, and the bandwidth of the second resource unit is a sum of bandwidths occupied by one or more resource units included in the second resource unit. In other words, the bandwidths of the first resource unit and the second resource unit are counted based on discontinuous occupancy. The first resource unit is used as an example. It is assumed that the first resource unit is a 996+484-tone RU, a 996-tone RU included in the 996+484-tone RU is located on a first 80 MHz, and a 484-tone RU is located on a second 40 MHz of a second 80 MHz. In this case, a bandwidth of the 996+484-tone RU is 120 MHz (80 MHz+40 MHz). Assuming that the first bandwidth size is 40 MHz, a quantity of bandwidths (namely, $RU\_BW\_Number_{allocated}$) of the first bandwidth size (namely, 40 MHz) included in the bandwidth (namely, 120 MHz) of the first resource unit is 3.

It should be understood that, if the second resource unit is all resource units in the first resource unit, the transmit power (namely, the first transmit power) of the station may also be calculated by using the foregoing formula (2-3) or the foregoing formula (2-4). However, in this case, $RU\_BW\_Number_{allocated}$ is equal to $RU\_BW\_Number_{new}$.

It should be further understood that, although an adaptive RU mentioned in this embodiment of this application is less than or equal to the originally allocated RU/MRU, power adjustment in implementations 1 and 2 is also applicable to a scenario in which the adaptive RU is greater than the originally allocated RU/MRU. In other words, the transmit power of the station is calculated by using a ratio of the adaptive RU to the originally allocated RU/MRU, which is also applicable to a scenario in which the adaptive RU is greater than the originally allocated RU/MRU.

Implementation 3: The first transmit power (namely, the transmit power of the station) is greater than or equal to second transmit power, and is less than or equal to third transmit power, in other words, the second transmit power $\leq$ the transmit power (namely, the first transmit power) of the station $\leq$ the third transmit power. The second transmit power may be calculated based on any one of the foregoing formula (2-1) to the foregoing formula (2-4), and details are not described herein again. The third transmit power may be determined based on the indication of the AP transmit power subfield and the indication of the uplink target receive power subfield. For a specific calculation manner, refer to the foregoing formula (1-1). Details are not described herein again.

It should be understood that, if the second resource unit is all resource units in the first resource unit, the transmit power (namely, the first transmit power) of the station may also be determined by using the implementation 3.

In an optional embodiment, the transmit power (namely, the first transmit power) of the station may be determined based on the indication of the AP transmit power subfield, the indication of the uplink target receive power subfield, and one fixed value (or a constant). The fixed value may be 3 dB. Specifically, a calculation manner (or a determining manner) of the first transmit power (namely, the transmit power of the station) may be represented by the following formula (2-5):

$$Tx_{pwr}^{STA} = PL_{DL} + TargetRx_{pwr} - 3 \qquad (2\text{-}5)$$

In the foregoing formula (2-5), $Tx_{pwr}^{STA}$ indicates transmit power of a station, namely, the foregoing first transmit power. $TargetRx_{pwr}$ indicates receive power expected by an AP, and a value of $TargetRx_{pwr}$ is a value indicated by an uplink target receive power subfield. $PL_{DL}$ indicates a path loss from a first access point to the station. $PL_{DL}$ may be determined based on an indication of an AP transmit power subfield and receive power of the station. A calculation formula is shown in the foregoing formula (1-2). Details are not described herein again. A unit of $TargetRx_{pwr}$ may be dBm.

In some scenarios or embodiments, the size of the second resource unit (an adaptive RU) does not exceed a half of the size of the first resource unit (the originally allocated MRU/RU). Therefore, a transmit power requirement of the station can be met by subtracting 3 dB.

In another optional embodiment, the transmit power (namely, the first transmit power) of the station may also be calculated by using the foregoing formula (1-1), that is, the transmit power (the first transmit power) of the station is determined based on the indication of the AP transmit power subfield and the indication of the uplink target receive power subfield. In other words, even if the size of the RU/MRU actually used by the station is inconsistent with the size of the RU/MRU allocated to the station, a manner of calculating the transmit power of the station remains unchanged.

It should be understood that, the transmit power (namely, the first transmit power) of the station still cannot exceed limitations such as a hardware capability, a supervision requirement, a local maximum transmit power level, and a non-802.11 device coexistence requirement. For details, refer to the description in implementation 3. Details are not described herein again.

Optionally, the first access point may further indicate, in the trigger frame, a calculation manner that may be used by the station to calculate the first transmit power. Specifically, the trigger frame further includes indication information, and the indication information indicates a manner of determining/calculating the first transmit power. The indication information may be carried in a common information field or a user information field of the trigger frame. A manner of determining the first transmit power includes one or more of the following: a first determining manner, a second determining manner, a third determining manner, and a fourth determining manner. The first determining manner is implementation 1, the second determining manner is implementation 2, the third determining manner is implementation 3, and the fourth determining manner is determining based on the indication of the AP transmit power subfield and the indication of the uplink target receive power subfield, in other words, a calculation manner of the foregoing formula (1-1) is used.

Optionally, in an implementation, a length of the indication information may be 1 bit, and the indication information indicates whether the transmit power of the station is variable. For example, when a value of the bit is 1, it indicates that the transmit power of the station is variable; and when a value of the bit is 0, it indicates that the transmit power of the station is unchangeable. Alternatively, on the contrary, when a value of the bit is 0, it indicates that the transmit power of the station is variable; and when a value of the bit is 1, it indicates that the transmit power of the station is unchangeable. When the indication information indicates that the transmit power of the station is variable, it implicitly indicates that the manner of determining the transmit power (namely, the first transmit power) of the station is one of implementation 1, implementation 2, and implementation 3. Specifically, which of the implementation 1, the implementation 2, and the implementation 3 may be determined based on a specification of a subsequent standard. When the indication information indicates that the transmit power of the station is unchangeable, it implicitly indicates that the manner of determining the transmit power (namely, the first transmit power) of the station is a calculation manner of the foregoing formula (1-1).

In another implementation, the indication information may be represented in a form of a bitmap (bitmap), and a length of the bitmap may be 4 bits. Four bits in the indication information respectively represent four determining manners. One bit in the indication information indicates whether the station supports a determining manner corresponding to the bit. For example, 1 indicates support, and 0 indicates not support. Assuming that the indication information is 0011, it indicates that the station supports the third determining manner (namely, implementation 3) and the fourth determining manner. For example, 1 indicates support, and 0 indicates not support. Assuming that the indication information is 1000, it indicates that the station supports the first determining manner (namely, implementation 1).

It should be understood that, this embodiment of this application mainly uses the trigger frame as an example, but may also be applicable to a form of triggering a TB PPDU, such as a triggered response scheduling (triggered response scheduling, TRS) control subfield.

It can be learned that, this embodiment of this application provides several manners of calculating the transmit power of the station in a scenario in which the station performs transmission by using the adaptive RU. This can resolve a transmit power problem of the station in this scenario, reduce interference of the station to another device, and control power of receiving the TB PPDU by the AP within a controllable range of the AP.

**Embodiment 2**

Embodiment 2 of this application mainly describes changing a meaning of a corresponding subfield in a trigger frame, to reduce impact on transmit power of a station when the station transmits a TB PPDU by using an adaptive RU.

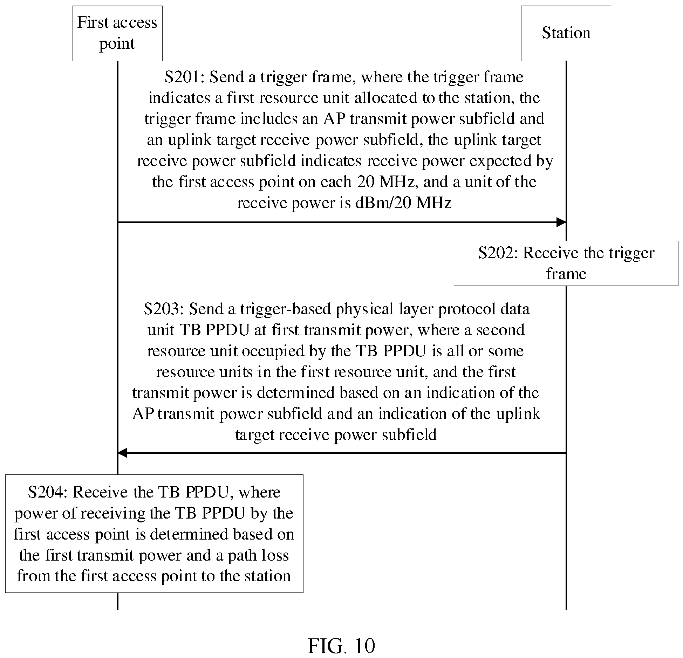

FIG. 10 is another schematic flowchart of a method for determining transmit power in a wireless local area network according to an embodiment of this application. As shown in FIG. 10, the method for determining the transmit power in the wireless local area network includes but is not limited to the following steps.

S201: A first access point sends a trigger frame, where the trigger frame indicates a first resource unit allocated to a station, the trigger frame includes an AP transmit power subfield and an uplink target receive power subfield, the uplink target receive power subfield indicates receive power expected by the first access point on each 20 MHz, and a unit of the receive power is dBm/20 MHz.

S202: The station receives the trigger frame.

S203: The station sends a trigger-based physical layer protocol data unit TB PPDU at first transmit power, where a second resource unit occupied by the TB PPDU is all or some resource units in the first resource unit, and the first transmit power is determined based on an indication of the AP transmit power subfield and an indication of the uplink target receive power subfield.

S204: The first access point receives the TB PPDU, where power of receiving the TB PPDU by the first access point is determined based on the first transmit power and a path loss from the first access point to the station.

Optionally, the first access point sends the trigger frame, where the trigger frame is used to trigger the station to send the TB PPDU, and the trigger frame further indicates the first resource unit allocated to the station. After receiving the trigger frame, the station may select, from the first resource unit based on a channel busy or idle state detected through sensing on the first resource unit, the second resource unit on which the TB PPDU is actually transmitted. In other words, the second resource unit occupied by the TB PPDU is all or some resource units in the first resource unit. The trigger frame includes an AP transmit power subfield and an uplink target receive power subfield, the uplink target receive power subfield indicates receive power expected by the first access point on each 20 MHz, and a unit of the receive power is dBm/20 MHz. The station may determine transmit power of the station based on the second resource unit, and the indication of the AP transmit power subfield in the trigger frame (for ease of description, the transmit power of the station is referred to as the first transmit power in this embodiment of this application). For a specific calculation manner, refer to the foregoing formula (1-1). The station sends the TB PPDU on the second resource unit at the determined first transmit power, for example, sends an EHT TB PPDU. Correspondingly, the first access point receives the TB PPDU, and returns an acknowledgment frame to the station. Power of receiving the TB PPDU by the first access point is determined based on the first transmit power and the path loss from the first access point to the station. For example, the power of receiving the TB PPDU by the first access point is equal to a difference between the first transmit power and the path loss from the first access point to the station.

It should be understood that, the uplink target receive power subfield indicates the receive power expected by the first access point on each 20 MHz, and the unit of the receive power is dBm/20 MHz. Therefore, a unit of the transmit power of the station calculated based on the foregoing formula (1-1) is also dBm/20 MHz. In other words, the first transmit power is transmit power of the station on each 20 MHz.

Optionally, an uplink target receive power subfield specified in the current 802.11be indicates receive power expected by an AP (on a total bandwidth), in other words, the receive power expected by the AP in the current 802.11be is the total power, and a unit is dBm. Therefore, when the uplink target receive power subfield indicates the receive power expected by the AP on each 20 MHz, the receive power (unit: dBm) expected by the AP in a maximum bandwidth (namely, 320 MHz) supported by the 802.11be needs to be reduced to dBm/20 MHz, in other words, reduced by 1/16, that is, 12 dB needs to be subtracted from receive power expected by the AP corresponding to each bandwidth. However, for a PPDU with a minimum bandwidth (namely, 20 MHz) supported by the 802. 1 1be, a maximum value of current receive power expected by the AP may still be used as the receive power expected by the AP on each 20 MHz. In other words, when the uplink target receive power subfield indicates the receive power expected by the AP on each 20 MHz, the maximum value of the receive power expected by the AP in the 802. 1 1be may remain unchanged, but a minimum value needs to be reduced.

In an implementation, a reserved value of the uplink target receive power subfield may be used to support an indication of 12 dB. For example, one reserved value of the uplink target receive power subfield indicates an increase/decrease of 1 dB. For example, a value and a corresponding description of the uplink target receive power subfield in the trigger frame are shown in the following Table 2. $F_{val}$ indicates a value indicated by an uplink target receive power subfield. $TargetRx_{pwr}$ indicates expected receive power. The uplink target receive power subfield indicates receive power expected by the first access point on each 20 MHz, and a unit of the receive power is dBm/20 MHz. It can be learned from Table 2 that, when the value of the uplink target receive power subfield is from 0 to 90, $F_{val}$ is also from 0 to 90. When the value of the uplink target receive power subfield is from 91 to 102, $F_{val}$ are -12, -11, -10, -9, -8, -7, -6, -5, -4, -3, -2, and -1 respectively. It should be understood that the value of the uplink target receive power subfield herein, namely 91 to 102, is only an example, and any 12 reserved values in reserved values (91 to 126) can indicate the value. When the value of the uplink target receive power subfield is 103 to 126, it still indicates reserved. When the value of the uplink target receive power subfield is 127, the expected receive power (namely, $TargetRx_{pwr}$) is a maximum transmit power of the station for an assigned HE-MCS minus a path loss (namely, $PL_{DL}$). It should be understood that, in Table 2, a maximum value of the expected receive power (namely, $TargetRx_{pwr}$) is still -20 dBm/20 MHz, and a minimum value is -122 dBm/20 MHz.

**Table 2: Values and corresponding descriptions 1 of an uplink target receive power subfield in a trigger frame**

| Uplink target receive power subfield (UL Target Receive Power subfield) | Description (description) |
|---|---|
| 0-90 | Expected receive power (unit: dBm/20 MHz) $TargetRx_{pwr}$ = -110 + $F_{val}$, where $F_{val}$ is a value of the subfield. (The expected receive signal power, in units of dBm/20 MHz, is $TargetRx_{pwr}$ = -110 + $F_{val}$, where $F_{val}$ is the subfield value.) |
| 91-102 | $F_{val}$ = -12, -11, -10, ..., -1, $TargetRx_{pwr}$ = -110 + $F_{val}$ |
| 103-126 | Reserved (Reserved) |
| 127 | A STA transmits an HE TB PPDU at maximum transmit power of the STA for an assigned HE-MCS. (The STA transmits the HE TB PPDU at the STA's maximum transmit power for the assigned HE-MCS.) Expected receive power is obtained by subtracting a path loss from maximum transmit power of the station for the assigned HE-MCS. (The expected receive signal power is then the STA's maximum transmit power for the assigned HE-MCS minus the path loss.) |

In another implementation, a range may be increased by increasing a power representation interval of each entry value interval in the uplink target receive power subfield. For example, (-20 + 122)/91 ≈ 1.12. Therefore, the original formula $TargetRx_{pwr}$ = -110 + $F_{val}$ may be modified to $TargetRx_{pwr}$ = -122 + 1. 1$F_{val}$, or $TargetRx_{pwr}$ = -122 + 1.2$F_{val}$. In this case, if the value range of the uplink target receive power subfield is from 0 to 90, it can indicate that the receive power expected by the first access point on each 20 MHz is from -122 dBm to -20 dBm. For example, a value and a corresponding description of the uplink target receive power subfield in the trigger frame may be shown in the following Table 3. $F_{val}$ indicates a value indicated by an uplink target receive power subfield. $TargetRx_{pwr}$ indicates expected receive power. The uplink target receive power subfield indicates receive power expected by the first access point on each 20 MHz, and a unit of the receive power is dBm/20 MHz. It can be learned from Table 3 that, when the value of the uplink target receive power subfield is 0 to 90, $F_{val}$ is also from 0 to 90, and $TargetRx_{pwr}$ = -122 + 1.1$F_{val}$, or $TargetRx_{pwr}$ = -122 + 1.2$F_{val}$. When the value of the uplink target receive power subfield is from 91 to 126, it indicates reserved. When the value of the uplink target receive power subfield is 127, the expected receive power (namely, $TargetRx_{pwr}$) is a maximum transmit power of the station for an assigned HE-MCS minus a path loss (namely, $PL_{DL}$).

**Table 3: Values and corresponding descriptions 2 of an uplink target receive power subfield in a trigger frame**

| Uplink target receive power subfield (UL Target Receive Power subfield) | Description (description) |
|---|---|
| 0-90 | Expected receive power (unit: dBm/20 MHz) $TargetRx_{pwr}$ = -122 + 1.1$F_{val}$ or $TargetRx_{pwr}$ = -122 + 1.2$F_{val}$, where $F_{val}$ is a value of the subfield. (The expected receive signal power, in units of dBm/20 MHz, is $TargetRx_{pwr}$ = -122 + 1.1$F_{val}$ or $TargetRx_{pwr}$ = -122 + 1.2$F_{val}$, where $F_{val}$ is the subfield value.) |
| 91-126 | Reserved (Reserved) |
| 127 | A STA transmits an HE TB PPDU at maximum transmit power of the STA for an assigned HE-MCS. (The STA transmits the HE TB PPDU at the STA's maximum transmit power for the assigned HE-MCS.) Expected receive power is obtained by subtracting a path loss from maximum transmit power of the station for the assigned HE-MCS. (The expected receive signal power is then the STA's maximum transmit power for the assigned HE-MCS minus the path loss.) |

It should be understood that changes in the values of the uplink target receive power subfield in both Table 2 and Table 3 do not affect a manner of calculating the expected receive power (namely, $TargetRx_{pwr}$) provided in this embodiment of this application, that is, the reserved value is used for indication, or the power representation interval is increased.

In still another implementation, the foregoing two implementations may be combined. In an example, the reserved value of the uplink target receive power subfield is used to support an indication of 12 dB. For example, less than 12 reserved values are used to support an indication of the receive power expected by the first access point on each 20 MHz from -122 dBm to -111 dBm, and the range may be increased by increasing a power representation interval of an entry value interval of less than 12 reserved values. For another example, a total of 95 values (for example, 0 to 94) are used to represent to support an indication of the receive power expected by the first access point on each 20 MHz from -122 dBm to -111 dBm, and the range may be increased by increasing a power representation interval of an entry value interval of the 95 values.

Certainly, the receive power expected by the first access point on each 20 MHz may also be calculated in a new manner, so that the range of the receive power expected by the first access point is from -122 dBm to -20 dBm.

In an optional embodiment, an uplink target receive power subfield also exists in a triggered response scheduling (triggered response scheduling, TRS) control subfield. Therefore, when the uplink target receive power subfield indicates the receive power expected by the AP on each 20 MHz, a power representation interval of each entry value interval of the uplink target receive power subfield in the TRS control field may be increased to increase the range. (-30 + 102)/31 ≈ 2.32. Therefore, the original formula $TargetRx_{pwr}$ = -90 + 2 × $F_{val}$ may be modified to $TargetRx_{pwr}$ = -90 + 2.3 × $F_{val}$, or $TargetRx_{pwr}$ = -122 + 2.4 × $F_{val}$. In this case, if the value range of the uplink target receive power subfield is from 0 to 30, it can indicate that the receive power expected by the first access point on each 20 MHz is from -102 dBm to -30 dBm. For example, a value and a corresponding description of the uplink target receive power subfield in the TRS control field may be shown in the following Table 4. $F_{val}$ indicates a value indicated by an uplink target receive power subfield. $TargetRx_{pwr}$ indicates expected receive power.

**Table 4: Value and corresponding description of the uplink target receive power subfield in the TRS control subfield**

| Uplink target receive power subfield (UL Target Receive Power subfield) | Description (description) |
|---|---|
| 0-30 | The expected receive power (unit: dBm/20 MHz) is $TargetRx_{pwr} = -90 + 2.3F_{val}$ or $TargetRx_{pwr} = -90 + 2.4F_{val}$, where $F_{val}$ is the value of the subfield. (The expected receive signal power, in units of dBm/20 MHz, is $TargetRx_{pwr} = -90 + 2.3F_{val}$ or $TargetRx_{pwr} = -90 + 2.4F_{val}$, where $F_{val}$ is the subfield value.) |
| 31 | A STA transmits an HE TB PPDU at maximum transmit power of the STA for an assigned HE-MCS. (The STA transmits the HE TB PPDU at the STA's maximum transmit power for the assigned HE-MCS.)<br>Note: The expected receive power is obtained by subtracting a path loss from maximum transmit power of the station for the assigned HE-MCS. (Note-The expected receive signal power is then the STA's maximum transmit power for the assigned HE-MCS minus the path loss.) |

It should be understood that a change in the value of the uplink target receive power subfield in Table 4 does not affect a manner of calculating the expected receive power (namely, $TargetRx_{pwr}$) provided in this embodiment of this application, that is, the power representation interval is increased.

It should be further understood that, this embodiment of this application mainly uses the trigger frame as an example, but may also be applicable to a form of triggering a TB PPDU, such as the TRS control subfield.

It can be learned that, in this embodiment of this application, a unit of the uplink target receive power in the EHT user information field is changed from dBm to dBm/20 MHz. In this case, a value indicated by the uplink target receive power subfield in the EHT user information field is no longer total power, but power per 20 MHz. This can reduce impact on the transmit power of the station when the station transmits the TB PPDU by using the adaptive RU, reduce interference of the station to another device, and control power of receiving the TB PPDU by the AP within a controllable range of the AP.

**Embodiment 3**

Embodiment 3 of this application mainly describes a transmit power design of a PSRT PPDU when a station transmits a TB PPDU by using an adaptive RU in an OBSS scenario. This embodiment changes a spatial reuse reading rule by obtaining the adaptive RU used by the station to transmit the TB PPDU, to resolve a transmit power problem of the PSRT PPDU.

Optionally, Embodiment 3 of this application may be independently implemented, or may be implemented in combination with Embodiment 1 or Embodiment 2. When Embodiment 3 of this application is implemented in combination with Embodiment 1 or Embodiment 2, the trigger frame in Embodiment 1 or Embodiment 2 may be carried in a PSRR PPDU.

Optionally, a first access point and a second access point in this embodiment of this application may be located in a same OBSS. For example, the first access point is the AP 1 in FIG. 5a, and the second access point is the AP 2 in FIG. 5a. In this embodiment of this application, a first station is associated with the first access point, or the first access point and a first station are located in one BSS. In this embodiment of this application, a second station is associated with the second access point, or the second access point and a second station are located in the other BSS.

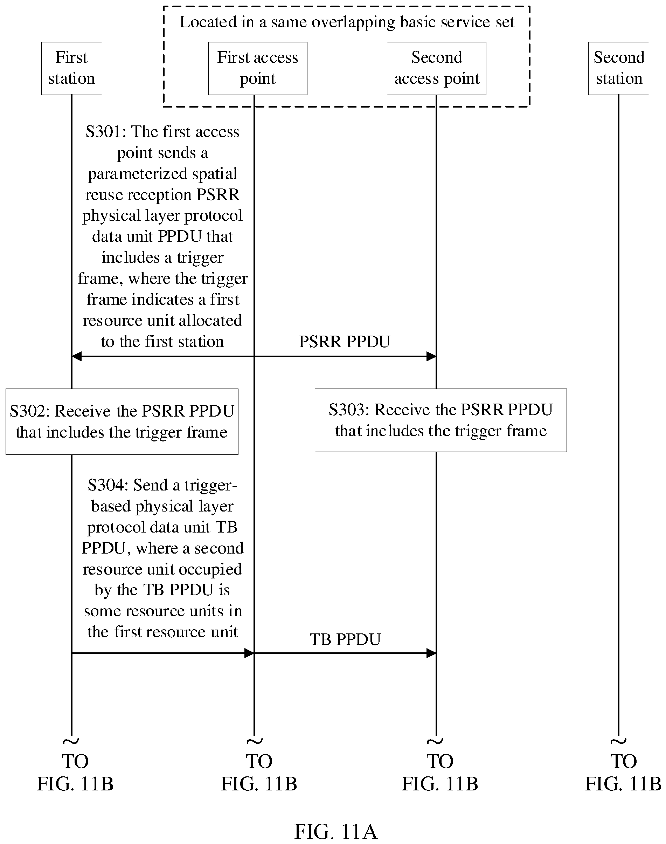

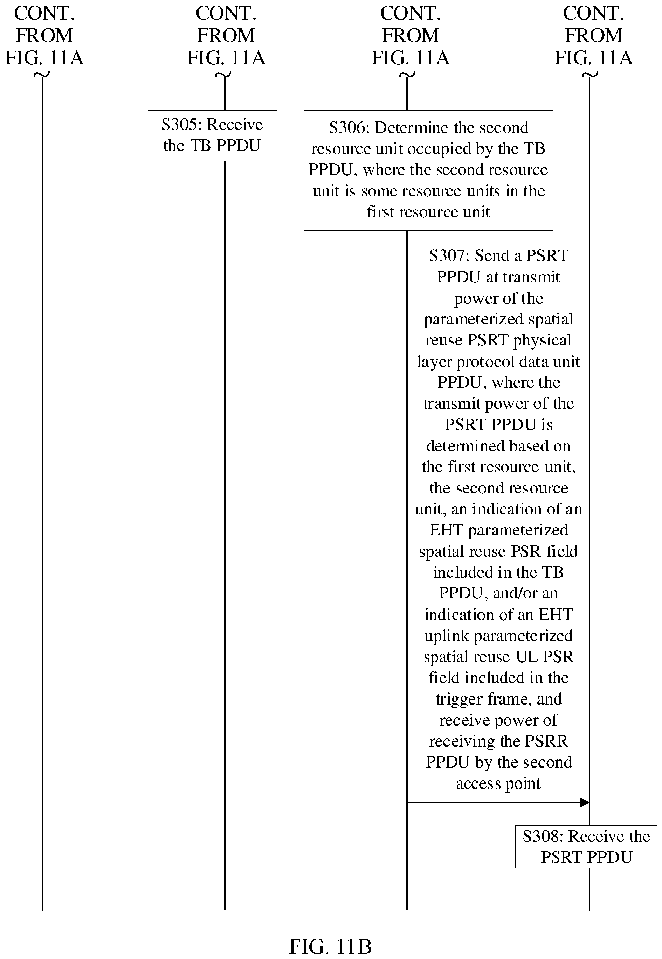

FIG. 11A and FIG. 11B are a schematic flowchart of a method for determining transmit power based on spatial reuse according to an embodiment of this application. As shown in FIG. 11A and FIG. 11B, the method for determining the transmit power based on spatial reuse includes but is not limited to the following steps:

S301: A first access point sends a parameterized spatial reuse reception PSRR physical layer protocol data unit PPDU that includes a trigger frame, where the trigger frame indicates a first resource unit allocated to a first station.
S302: The first station receives the PSRR PPDU that includes the trigger frame.
S303: A second access point receives the PSRR PPDU that includes the trigger frame.
S304: The first station sends a trigger-based physical layer protocol data unit TB PPDU, where a second resource unit occupied by the TB PPDU is some resource units in the first resource unit.
S305: The first access point receives the TB PPDU.

S306: The second access point determines the second resource unit occupied by the TB PPDU, where the second resource unit is some resource units in the first resource unit.

S307: The second access point sends a PSRT PPDU at transmit power of the parameterized spatial reuse PSRT physical layer protocol data unit PPDU, where the transmit power of the PSRT PPDU is determined based on the first resource unit, the second resource unit, an indication of an EHT parameterized spatial reuse PSR field included in the TB PPDU, and/or an indication of an EHT uplink parameterized spatial reuse UL PSR field included in the trigger frame, and receive power of receiving the PSRR PPDU by the second access point.

S308: The second station receives the PSRT PPDU.

Optionally, the first access point sends the PSRR PPDU that includes the trigger frame, where the trigger frame is used to schedule the first station to send the TB PPDU, and the trigger frame further indicates the first resource unit allocated to the first station. Correspondingly, the first station receives the PSRR PPDU that includes the trigger frame. The first access point and the second access point are located in a same OBSS. Therefore, the second access point may also receive the PSRR PPDU that includes the trigger frame and that is sent by the first access point. After receiving the PSRR PPDU that includes the trigger frame, the first station may select from the first resource unit based on a channel busy or idle state detected through sensing on the first resource unit, the second resource unit on which the TB PPDU is actually transmitted. The first station may calculate transmit power of the first station, and send the TB PPDU on the second resource unit at the calculated transmit power, for example, send an EHT TB PPDU. Correspondingly, the first access point receives the TB PPDU, and returns an acknowledgment frame to the first station. The second access point may also receive the TB PPDU. The second access point may determine, in a blind detection manner, the second resource unit occupied by the TB PPDU that is sent by the first station. Alternatively, the second access point may determine, by parsing signaling (for example, a U-SIG field) in the TB PPDU, the second resource unit occupied by the TB PPDU. The second resource unit is some resource units in the first resource unit. The second access point may determine transmit power of the second access point (namely, the transmit power of the PSRT PPDU) based on the first resource unit, the second resource unit, the indication of the EHT parameterized spatial reuse PSR field included in the TB PPDU, and/or the indication of the EHT uplink parameterized spatial reuse UL PSR field included in the trigger frame, and the receive power of receiving the PSRR PPDU by the second access point. In other words, signaling of an adaptive RU in the TB PPDU can indicate effectiveness of spatial reuse (the signaling of adaptive RU in TB PPDU can indicate the validation of spatial reuse.). Then, the second access point sends the PSRT PPDU at the determined transmit power of the PSRT PPDU. Correspondingly, the second station receives the PSRT PPDU. For a manner in which the first station calculates the transmit power of the first station, refer to corresponding descriptions in Embodiment 1 or Embodiment 2. Details are not described herein again.

It should be understood that, this embodiment of this application uses an example in which the second access point sends the PSRT PPDU for description. In actual application, a station (for example, a third station) may send the PSRT PPDU, and a manner of calculating the transmit power of the PSRT PPDU remains unchanged.

Optionally, the transmit power of the PSRT PPDU is less than or equal to a difference between a PSR value and the receive power (the RPL) of receiving the PSRR PPDU by the second access point. The PSR value may be determined based on the first resource unit, the second resource unit, the indication of the EHT PSR field included in the TB PPDU, and/or the indication of the EHT UL PSR field included in the trigger frame. It should be understood that the PSR value herein may be a PSR value of a total bandwidth (a bandwidth for sending the PSRR PPDU herein).

Optionally, the first resource unit further includes a third resource unit, and the third resource unit is a difference set of the first resource unit and the second resource unit. In other words, the third resource unit is a resource unit that is not used to transmit the TB PPDU in the first resource unit. In an example, it is assumed that the first resource unit is a $2 \times 996$-tone RU, and the second resource unit is a 996+484-tone MRU. In this case, the third resource unit is a resource unit that is not used by the station in the first resource unit, that is, a 484-tone RU that is not used to transmit the TB PPDU in the $2 \times 996$-tone RU. In another example, it is assumed that the first resource unit is a $3 \times 996$-tone MRU, and the second resource unit is a $2 \times 996$-tone RU. In this case, the third resource unit is a resource unit that is not used by the station in the first resource unit, that is, a 996-tone RU that is not used to transmit the TB PPDU in the $3 \times 996$-tone MRU.

In some embodiments or scenarios, the second access point may directly determine, through blind detection, a resource unit (namely, the third resource unit) that is not used by the station in the first resource unit, and does not need to obtain the difference set of the first resource unit allocated to the station and the second resource unit actually occupied by the station. In some other embodiments or scenarios, the second access point may directly determine, by parsing the U-SIG field in the TB PPDU, a resource unit (namely, the third resource unit) that is not used by the station in the first resource unit, and does not need to obtain the difference set of the first resource unit allocated to the station and the second resource unit actually occupied by the station.

Optionally, transmit power of the PSRT PPDU on the third resource unit is less than or equal to a difference between a PSR value of the third resource unit and receive power of receiving the PSRR PPDU by the second access point on the third resource unit. It should be understood that the transmit power of the PSRT PPDU may be calculated at a granularity of the resource unit.

Optionally, transmit power of the PSRT PPDU on one 20 MHz sub-channel on which the third resource unit is located is less than or equal to a difference between a PSR value of the 20 MHz sub-channel and receive power of receiving the PSRR PPDU by the second access point on the 20 MHz sub-channel. It should be understood that the transmit power of the PSRT PPDU may be calculated at a granularity of the 20 MHz sub-channel.

Optionally, the PSR value of the third resource unit may be -26 dBm or positive infinity. The PSR value of one 20 MHz sub-channel is -26 dBm or positive infinity. In other words, a spatial reuse limitation corresponding to the resource unit that is determined, through detection by the second access point, not to be actually used (namely, the third resource unit) in an MRU/RU allocated to the TB PPDU may be eliminated. It may also be understood that the PSR value of the resource unit may be infinite. Alternatively, a spatial reuse limitation corresponding to the resource unit that is determined, through detection by the second access point, not to be actually used (namely, the third resource unit) in an MRU/RU allocated to the TB PPDU may be reduced. It may also be understood that a maximum value (-26 dBm) in Table 1 may be selected as the PSR value of the resource unit. In other words, once the PSRT PPDU finds that the TB-PPDU is an adaptive PPDU, a corresponding spatial reuse limitation may be ignored, which indicates that a power limit of a corresponding part in the PSRT PPDU is canceled (or set to a maximum value). (once the PSRT PPDU finds that the TB PPDU is an adaptive PPDU, the limitation of the corresponding spatial reuse can be ignored, which indicates the cancellation of the power limitation in PSRT PPDU in the corresponding part (or set it to the largest number).)

Certainly, a maximum transmit power limit of the second access point still needs to be considered herein. To be specific, the transmit power of the PSRT PPDU on the third resource unit or on the 20 MHz sub-channel on which the third resource unit is located cannot exceed maximum transmit power of the second access point. Alternatively, when the transmit power of the PSRT PPDU on the third resource unit or on the 20 MHz sub-channel on which the third resource unit is located exceeds the maximum transmit power of the second access point, the second access point sends the PSRT PPDU at the maximum transmit power of the second access point.

Optionally, the PSR value of the third resource unit may be a sum of a value indicated by a first EHT PSR field included in the TB PPDU and a preset value. Alternatively, the PSR value of the third resource unit may be a sum of a value indicated by a first EHT UL PSR field included in the trigger frame and a preset value. The PSR value of one 20 MHz sub-channel is the sum of the value indicated by the first EHT PSR field included in the TB PPDU and the preset value. Alternatively, the PSR value of one 20 MHz sub-channel is the sum of the value indicated by the first EHT UL PSR field included in the trigger frame and the preset value. The preset value may be 3 dB. In other words, the spatial reuse limitation corresponding to the resource unit that is determined, through detection by the second access point, not to be actually used (namely, the third resource unit) in the MRU/RU allocated to the TB PPDU may be reduced. It may also be understood as adding X dB to an original value. For example, X is equal to 3. X is a positive integer. Certainly, a maximum transmit power limit of the second access point still needs to be considered herein.

Optionally, the PSR value of the third resource unit may be a larger value of values indicated by two EHT PSR fields included in the TB PPDU. Alternatively, the PSR value of the third resource unit may be a larger value of values indicated by two EHT UL PSR fields included in the trigger frame. Similarly, the PSR value of one 20 MHz sub-channel is a larger value of values indicated by two EHT PSR fields included in the TB PPDU. Alternatively, the PSR value of one 20 MHz sub-channel may be a larger value of values indicated by two EHT UL PSR fields included in the trigger frame.

The first EHT PSR field/first EHT UL PSR field corresponds to the third resource unit, or a frequency indication range of the first EHT PSR field/first EHT UL PSR field includes the third resource unit, or a frequency indication range of the first EHT PSR field/first EHT UL PSR field overlaps the third resource unit. It should be understood that a frequency indication range of the first EHT PSR field is associated with a bandwidth (the bandwidth herein is a bandwidth allocated by the first access point to the station). When the bandwidth is 20 MHz, the frequency indication range of the first EHT PSR field is 20 MHz. When the bandwidth is 40 MHz, the frequency indication range of the first EHT PSR field is 40 MHz. When the bandwidth is 80 MHz, the frequency indication range of the first EHT PSR field is 40 MHz. When the bandwidth is 160 MHz, the frequency indication range of the first EHT PSR field is 80 MHz. When the bandwidth is 320 MHz, the frequency indication range of the first EHT PSR field is 160 MHz.

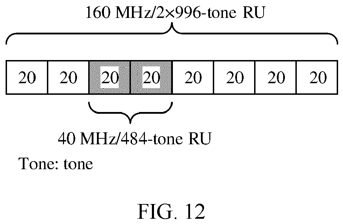

The following uses an example with reference to the resource unit shown in FIG. 12. FIG. 12 is a schematic diagram of the first resource unit, the second resource unit, and the third resource unit according to an embodiment of this application. As shown in FIG. 12, the first resource unit (or originally allocated) is a 2×996-tone RU, which includes eight 20 MHz sub-channels; the second resource unit (or actually used to transmit the TB PPDU) is a 996+484-tone MRU, which includes six 20 MHz sub-channels; and one 484-tone RU (namely, the third resource unit) in the 2×996-tone RU is not used (for example, the 484-tone RU formed by a third 20 MHz sub-channel and a fourth 20 MHz sub-channel from left to right in FIG. 12). In a possible implementation, the second access point sets a PSR value of the unused 484-tone RU (for example, the 484-tone RU formed by the third 20 MHz sub-channel and the fourth 20 MHz sub-channel in FIG. 12) to infinity (namely, positive infinity). In other words, the unused 484-tone RU (for example, the 484-tone RU formed by the third 20 MHz sub-channel and the fourth 20 MHz sub-channel in FIG. 12) does not need to comply with a spatial reuse value limit. In another possible implementation, the second access point sets a PSR value of the unused 484-tone RU (for example, the 484-tone RU formed by the third 20 MHz sub-channel and the fourth 20 MHz sub-channel in FIG. 12) to a maximum value (namely, -26 dBm), or adds one preset value (for example, 3 dB) to an original value. In other words, the unused 484-tone RU (for example, the 484-tone RU formed by the third 20 MHz sub-channel and the fourth 20 MHz sub-channel in FIG. 12) may have a larger PSR value. The unused 484-tone RU is located in a first 80 MHz, and frequency indication ranges of an EHT PSR1 field and an EHT UL PSR1 field in a 160 MHz bandwidth are the first 80 MHz. Therefore, adding one preset value based on the original value may be understood as adding one preset value to a value indicated by the EHT PSR1 field/a value indicated by the EHT UL PSR1 field.

It can be learned that in this embodiment of this application, in the OBSS scenario, the second access point changes a spatial reuse reading rule by obtaining the adaptive RU used by the station to transmit the TB PPDU, to resolve the transmit power problem of the PSRT PPDU. This can increase the transmit power of the second access point, so that the second access point obtains a larger gain.

**Embodiment 4**

Embodiment 4 of this application mainly describes a design of an EHT PSR field when a station transmits a TB PPDU by using an adaptive RU in an OBSS scenario. A value of the EHT PSR field is set mainly by directly changing a meaning of spatial reuse in the TB PPDU with reference to a related indication of the adaptive RU.

Optionally, Embodiment 4 of this application may be independently implemented, or may be implemented in combination with Embodiment 1 or Embodiment 2. When Embodiment 4 of this application is implemented in combination with Embodiment 1 or Embodiment 2, the trigger frame in Embodiment 1 or Embodiment 2 may be carried in a PSRR PPDU.

Optionally, a first access point and a second access point in this embodiment of this application may be located in a same OBSS. For example, the first access point is the AP 1 in FIG. 5a, and the second access point is the AP 2 in FIG. 5a. In this embodiment of this application, a first station is associated with the first access point, or the first access point and a first station are located in one BSS. In this embodiment of this application, a second station is associated with the second access point, or the second access point and a second station are located in the other BSS.

It should be understood that a difference between Embodiment 4 and Embodiment 3 lies in this application in that: Signaling of a TB PPDU is not modified in Embodiment 3, but signaling of the TB PPDU is directly modified in Embodiment 4 of this application.

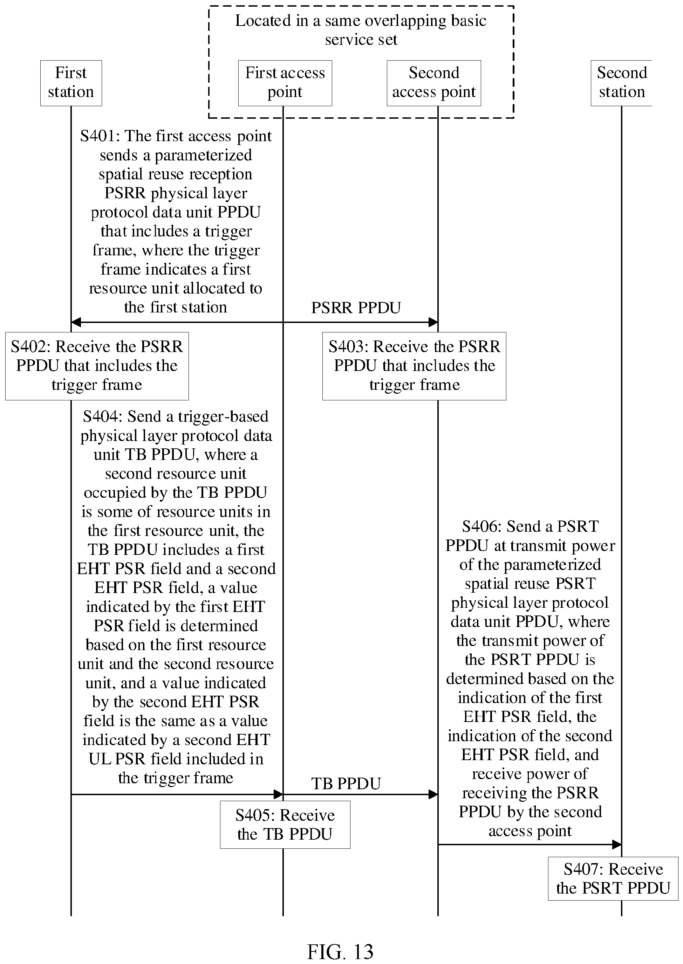

FIG. 13 is a schematic flowchart of a method for determining a spatial reuse parameter field in a PPDU according to an embodiment of this application. As shown in FIG. 13, the method for determining the spatial reuse parameter field in the PPDU includes but is not limited to the following steps.

S401: A first access point sends a parameterized spatial reuse reception PSRR physical layer protocol data unit PPDU that includes a trigger frame, where the trigger frame indicates a first resource unit allocated to a first station.

S402: The first station receives the PSRR PPDU that includes the trigger frame.

S403: A second access point receives the PSRR PPDU that includes the trigger frame.

S404: The first station sends a trigger-based physical layer protocol data unit TB PPDU, where a second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame.

S405: The first access point receives the TB PPDU.

S406: The second access point sends a PSRT PPDU at transmit power of the parameterized spatial reuse PSRT physical layer protocol data unit PPDU, where the transmit power of the PSRT PPDU is determined based on the indication of the first EHT PSR field, the indication of the second EHT PSR field, and receive power of receiving the PSRR PPDU by the second access point.

S407: The second station receives the PSRT PPDU.

Optionally, the first access point sends the PSRR PPDU that includes the trigger frame, where the trigger frame is used to schedule the first station to send the TB PPDU, and the trigger frame further indicates the first resource unit allocated to the first station. Correspondingly, the first station receives the PSRR PPDU that includes the trigger frame. The first access point and the second access point are located in a same OBSS. Therefore, the second access point may also receive the PSRR PPDU that includes the trigger frame and that is sent by the first access point. After receiving the PSRR PPDU that includes the trigger frame, the first station may select from the first resource unit based on a channel busy or idle state detected through sensing on the first resource unit, the second resource unit on which the TB PPDU is actually transmitted. In other words, the second resource unit occupied by the TB PPDU is some resource units in the first resource unit. The first station may calculate transmit power of the first station, and send the TB PPDU on the second resource unit at the calculated transmit power, for example, send an EHT TB PPDU. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame. Correspondingly, the first access point receives the TB PPDU, and returns an acknowledgment frame to the first station. The second access point may also receive the TB PPDU. In other words, once the TB-PPDU selects the adaptive RU, a corresponding spatial reuse value may be dynamically changed by the STA that sends the TB-PPDU, indicating that there is no need to copy in those parts (Once the TB PPDU choose adaptive RU, the corresponding spatial reuse value can be changed dynamically by the STA transmitting the TB PPDU, indicating no need to copy in those parts). For a manner in which the first station calculates the transmit power of the first station, refer to corresponding descriptions in Embodiment 1 or Embodiment 2. Details are not described herein again.

After receiving the TB PPDU, the second access point may determine transmit power of the second access point (namely, the transmit power of the PSRT PPDU) based on the indication of the first EHT PSR field, the indication of the second EHT PSR field, and the receive power of receiving the PSRR PPDU by the second access point. For a specific manner of calculating the transmit power of the PSRT PPDU, refer to the foregoing formula (1-3). Details are not described herein again. Then, the second access point sends the PSRT PPDU at the determined transmit power of the PSRT PPDU. Correspondingly, the second station receives the PSRT PPDU.

It should be understood that, this embodiment of this application uses an example in which the second access point sends the PSRT PPDU for description. In actual application, a station (for example, a third station) may send the PSRT PPDU, and a manner of calculating the transmit power of the PSRT PPDU remains unchanged.

Optionally, the first resource unit further includes a third resource unit, and the third resource unit is a difference set of the first resource unit and the second resource unit. In other words, the third resource unit is a resource unit that is not used to transmit the TB PPDU in the first resource unit. In an example, it is assumed that the first resource unit is a 2×996-tone RU, and the second resource unit is a 996-tone RU. In this case, the third resource unit is a resource unit that is not used by the first station in the first resource unit, that is, a 996-tone RU that is not used to transmit the TB PPDU in the 2×996-tone RU.

Optionally, if a frequency range of the third resource unit is greater than or equal to a frequency indication range of the first EHT PSR field included in the TB PPDU, the value indicated by the first EHT PSR field is -26 dBm or positive infinity. In other words, if a frequency range of an actually unused resource unit (namely, the third resource unit) in an MRU/RU allocated to the TB PPDU is greater than or equal to a frequency indication range of a specific EHT PSR field, a spatial reuse value limit on the resource unit may be eliminated. It may also be understood that a PSR value of the resource unit may be infinite, that is, the EHT PSR field is changed to indicate infinite. Alternatively, if a frequency range of an actually unused resource unit (namely, the third resource unit) in an MRU/RU allocated to the TB PPDU is greater than or equal to a frequency indication range of a specific EHT PSR field, a spatial reuse value limit on the resource unit may be reduced. It may also be understood that a maximum value (-26 dBm) in Table 1 may be selected as a PSR value of the resource unit, that is, the EHT PSR field is changed to indicate that the value is greater than or equal to -26 dBm, that is, the value of the EHT PSR field is 14. In other words, spatial reuse may have different granularities, and if a corresponding Y MHz is not used by the adaptive RU/MRU, configuration may be set to unlimited (or set to a maximum value). (Spatial reuse may have different granularities, if the corresponding Y MHz is not used by that adaptive RU/MRU, the configuration can be set to no limitation (or set to the largest number)). Y is a positive integer, and a value of Y may be 20, 40, 80, 160, 320, or the like.

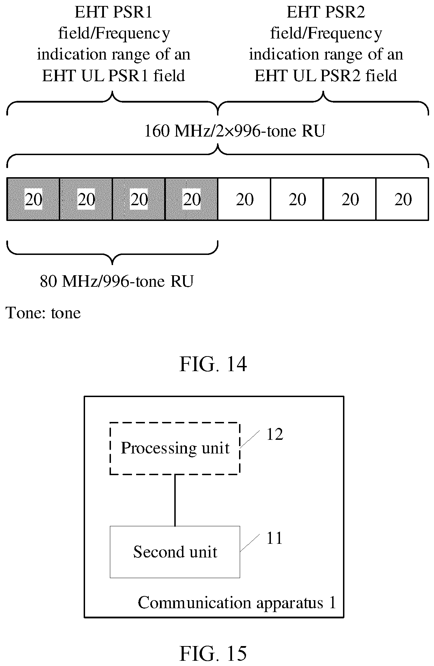

The following uses an example with reference to the resource unit shown in FIG. 14 and the frequency indication range of the EHT PSR field. FIG. 14 is a schematic diagram of a third resource unit and a frequency indication range of an EHT PSR field according to an embodiment of this application. As shown in FIG. 14, the first resource unit (or originally allocated) is a 2×996-tone RU, which includes eight 20 MHz sub-channels; the second resource unit (or actually used to transmit the TB PPDU) is a 996-tone RU, which includes four 20 MHz sub-channels (a fifth 20 MHz sub-channel to an eighth 20 MHz sub-channel from left to right in FIG. 14); and one 996-tone RU (namely, the third resource unit) in the 2×996-tone RU is not used. (for example, a first 20 MHz sub-channel to a fourth 20 MHz sub-channel from left to right in FIG. 14). Because a bandwidth of the first resource unit is 160 MHz, in the 160 MHz bandwidth, frequency indication ranges of an EHT PSR1 field and an EHT UL PSR1 field are a first 80 MHz, and frequency indication ranges of an EHT PSR2 field and an EHT UL PSR2 field are a second 80 MHz. In addition, because a bandwidth of the third resource unit (for example, the first 20 MHz sub-channel to the fourth 20 MHz sub-channel from left to right in FIG. 14) is 80 MHz and is the first 80 MHz, a frequency range of the third resource unit is equal to a frequency indication range of the EHT PSR1 field. In this case, the EHT PSR1 field is changed to indicate a maximum value, and it is considered that a spatial reuse value of a frequency band corresponding to the EHT PSR1 field can be eliminated. Alternatively, the EHT PSR1 field is directly changed to indicate unlimited (currently, this entry does not exist in Table 1, so one entry may also be added to Table 1, indicating unlimited).

Optionally, if a frequency range of the third resource unit is greater than or equal to a frequency indication range of the first EHT PSR field included in the TB PPDU, the value indicated by the first EHT PSR field is a sum of a value indicated by a first EHT UL PSR field included in the trigger frame and a preset value. The preset value may be 3 dB.

In other words, if a frequency range of an actually unused resource unit (namely, the third resource unit) in an MRU/RU allocated to the TB PPDU is greater than or equal to a frequency indication range of a specific EHT PSR field, a spatial reuse value limit on the resource unit may be reduced. It may also be understood that a PSR value of the resource unit may be increased by a specific value, for example, 3 dB, that is, the EHT PSR field is changed to indicate the sum of the value indicated by the first EHT UL PSR field and the preset value.

Optionally, if a frequency range of the third resource unit is greater than or equal to a frequency indication range of the first EHT PSR field included in the TB PPDU, the value indicated by the first EHT PSR field is a larger value of the value indicated by the first EHT UL PSR field included in the trigger frame and the value indicated by the second EHT UL PSR field. In other words, if a frequency range of an actually unused resource unit (namely, the third resource unit) in an MRU/RU allocated to the TB PPDU is greater than or equal to a frequency indication range of a specific EHT PSR field, the value indicated by the EHT PSR field is a larger value of values indicated by two EHT UL PSR fields included in the trigger frame.

It should be understood that if a frequency range of the third resource unit is less than a frequency indication range of the first EHT PSR field included in the TB PPDU, the value of the first EHT PSR field is directly copied from the value of the first EHT UL PSR field included in the trigger frame.

It can be learned that in this embodiment of this application, in the OBSS scenario, the first station sets the value of the EHT PSR field by directly changing the meaning of spatial reuse in the TB PPDU with reference to the related indication of the adaptive RU. This can resolve a transmit power problem of the PSRT PPDU, and increase transmit power of a second access point, so that the second access point obtains a larger gain.

The foregoing content describes in detail the methods provided in this application. To facilitate implementation of the foregoing solutions in embodiments of this application, embodiments of this application further provide corresponding apparatuses or devices.

In embodiments of this application, the access point and the station may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that module division in this embodiment in this application is an example and is merely logical function division. In actual implementation, there may be another division manner. The following describes in detail communication apparatuses in embodiments of this application with reference to FIG. 15 to FIG. 17. The communication apparatus is an access point or a station. Further, the communication apparatus may be an apparatus in an AP, or the communication apparatus may be an apparatus in a STA.

When an integrated unit is used, FIG. 15 is a schematic diagram of a structure of a communication apparatus 1 according to an embodiment of this application. As shown in FIG. 15, the communication apparatus 1 includes a second unit 11, and optionally includes a processing unit 12.

In a first design, the communication apparatus 1 may be a first access point or a chip in the first access point, for example, a Wi-Fi chip. The second unit 11 is configured to send a trigger frame, where the trigger frame indicates a first resource unit allocated to a station. The trigger frame includes an access point AP transmit power subfield and an uplink target receive power subfield. The second unit 11 is further configured to receive a TB PPDU. Power of receiving the TB PPDU is determined based on first transmit power and a path loss from the first access point to the station. The first transmit power is determined based on an indication of the AP transmit power subfield, an indication of the uplink target receive power subfield, a second resource unit, and the first resource unit. It should be understood that the second unit 11 is configured to implement receiving and sending functions, and the second unit 11 may also be referred to as a transceiver unit.

Optionally, the processing unit 12 is configured to generate the trigger frame.

Optionally, the first transmit power is determined based on a value indicated by the AP transmit power subfield, a value indicated by the uplink target receive power subfield, a size of the second resource unit, and a size of the first resource unit.

Optionally, that the first transmit power is determined based on an indication of the AP transmit power subfield, an indication of the uplink target receive power subfield, a second resource unit, and the first resource unit specifically includes: the first transmit power is determined based on the indication of the AP transmit power subfield, the indication of the uplink target receive power subfield, and a ratio of the size of the second resource unit to the size of the first resource unit.

Optionally, the size of the first resource unit is determined based on a total quantity of subcarriers included in the first resource unit, and the size of the second resource unit is determined based on a total quantity of subcarriers included in the second resource unit.

Optionally, the first transmit power is:

$$Tx_{pwr}^{STA} = PL_{DL} + TargetRx_{pwr} - 10\log_{10}(\frac{RU\_SIZE_{allocated}}{RU\_SIZE_{new}}) .$$

$Tx_{pwr}^{STA}$ indicates first transmit power. $TargetRx_{pwr}$ is a value indicated by an uplink target receive power subfield. $RU\_SIZE_{allocated}$ indicates a size of a first resource unit allocated to a station. $RU\_SIZE_{new}$ indicates a size of a second resource unit occupied by a TB PPDU. $PL_{DL}$ indicates a path loss from a first access point to the station, and the path loss from the first access point to the station is determined based on an indication of an AP transmit power subfield and receive power of the station.

Optionally, the size of the first resource unit is determined based on a quantity of first bandwidth sizes included in a bandwidth of the first resource unit, and the size of the second resource unit is determined based on a quantity of first bandwidth sizes included in a bandwidth of the second resource unit.

Optionally, the first bandwidth size is any one of the following: 20 MHz, 40 MHz, 80 MHz, 160 MHz, and 320 MHz.

Optionally, the first transmit power is:

$$Tx_{pwr}^{STA} = PL_{DL} + TargetRx_{pwr} - 10\log_{10}(\frac{RU\_BW\_Number_{allocated}}{RU\_BW\_Number_{new}}) .$$

$Tx_{pwr}^{STA}$ indicates first transmit power. $TargetRx_{pwr}$ is a value indicated by an uplink target receive power subfield. $RU\_BW\_Number_{allocated}$ indicates a quantity of first bandwidth sizes included in a bandwidth of a first resource unit. $RU\_BW\_Number_{new}$ indicates a quantity of first bandwidth sizes included in a bandwidth of a second resource unit. $PL_{DL}$ indicates a path loss from a first access point to a station, and the path loss from the first access point to the station is determined based on an indication of an AP transmit power subfield and receive power of the station.

Optionally, the bandwidth of the first resource unit is from a lowest frequency of the first resource unit to a highest frequency of the first resource unit, and the bandwidth of the second resource unit is from a lowest frequency of the second resource unit to a highest frequency of the second resource unit. Alternatively, the bandwidth of the first resource unit is a sum of bandwidths occupied by one or more resource units included in the first resource unit, and the bandwidth of the second resource unit is a sum of bandwidths occupied by one or more resource units included in the second resource unit.

Optionally, the trigger frame further includes indication information, and the indication information indicates a manner of determining the first transmit power. The manner of determining the first transmit power includes one or more of the following: a first determining manner, a second determining manner, and a third determining manner. The first determining manner is determining based on the value indicated by the AP transmit power subfield, the value indicated by the uplink target receive power subfield, the total quantity of subcarriers included in the second resource unit, and the total quantity of subcarriers included in the first resource unit. The second determining manner is determining based on the value indicated by the AP transmit power subfield, the value indicated by the uplink target receive power subfield, the quantity of first bandwidth sizes included in the bandwidth of the second resource unit, and the quantity of first bandwidth sizes included in the bandwidth of the first resource unit. The third determining manner is determining based on the indication of the AP transmit power subfield and the indication of the uplink target receive power subfield.

Optionally, the indication information is located in a common information field or a user information field of the trigger frame.

It should be understood that the communication apparatus 1 in the first design may correspondingly perform Embodiment 1, and the foregoing operations or functions of the units in the communication apparatus 1 are configured to implement corresponding operations of the first access point in Embodiment 1. For brevity, details are not described herein again.

In a second design, the communication apparatus 1 may be a first access point or a chip in the first access point, for example, a Wi-Fi chip. The second unit 11 is configured to send a trigger frame, where the trigger frame indicates a first resource unit allocated to a station. The trigger frame includes an AP transmit power subfield and an uplink target receive power subfield. The uplink target receive power subfield indicates receive power expected by the first access point on each 20 MHz, and a unit of the receive power is dBm/20 MHz. The second unit 11 is further configured to receive a TB PPDU. A second resource unit occupied by the TB PPDU is all or some resource units in the first resource unit. Power of receiving the TB PPDU by the first access point is determined based on the first transmit power and the path loss from the first access point to the station. The first transmit power is determined based on an indication of the AP transmit power subfield and an indication of the uplink target receive power subfield. It should be understood that the second unit 11 is configured to implement receiving and sending functions, and the second unit 11 may also be referred to as a transceiver unit.

Optionally, the processing unit 12 is configured to generate the trigger frame.

It should be understood that the communication apparatus 1 in the second design may correspondingly perform Embodiment 2, and the foregoing operations or functions of the units in the communication apparatus 1 are configured to implement corresponding operations of the first access point in Embodiment 2. For brevity, details are not described herein again.

In a third design, the communication apparatus 1 may be a second access point or a chip in the second access point, for example, a Wi-Fi chip. The second unit 11 is configured to receive a parameterized spatial reuse reception PSRR physical layer protocol data unit PPDU that includes a trigger frame, where the trigger frame indicates a first resource unit allocated to a station. The processing unit 12 is configured to determine a second resource unit occupied by a TB PPDU sent by the station, where the second resource unit is some resource units in the first resource unit. The second unit 11 is further configured to send a PSRT PPDU at transmit power of the PSRT PPDU. The transmit power of the PSRT PPDU is determined based on the first resource unit, the second resource unit, an indication of an EHT parameterized spatial reuse PSR field included in the TB PPDU, and/or an indication of an EHT uplink parameterized spatial reuse UL PSR field included in the trigger frame, and receive power of receiving the PSRR PPDU by the second access point. It should be understood that the second unit 11 is configured to implement receiving and sending functions, and the second unit 11 may also be referred to as a transceiver unit.

It should be understood that the communication apparatus 1 in the third design may correspondingly perform Embodiment 3, and the foregoing operations or functions of the units in the communication apparatus 1 are configured to implement corresponding operations of the second access point in Embodiment 3. For brevity, details are not described herein again.

In a fourth design, the communication apparatus 1 may be a first access point or a chip in the first access point, for example, a Wi-Fi chip. The second unit 11 is configured to send a trigger frame, where the trigger frame indicates a first resource unit allocated to a first station. The second unit 11 is further configured to receive a TB PPDU. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame. It should be understood that the second unit 11 is configured to implement receiving and sending functions, and the second unit 11 may also be referred to as a transceiver unit.

Optionally, the processing unit 12 is configured to generate the trigger frame.

It should be understood that the communication apparatus 1 in the fourth design may correspondingly perform Embodiment 4, and the foregoing operations or functions of the units in the communication apparatus 1 are configured to implement corresponding operations of the first access point in Embodiment 4. For brevity, details are not described herein again.

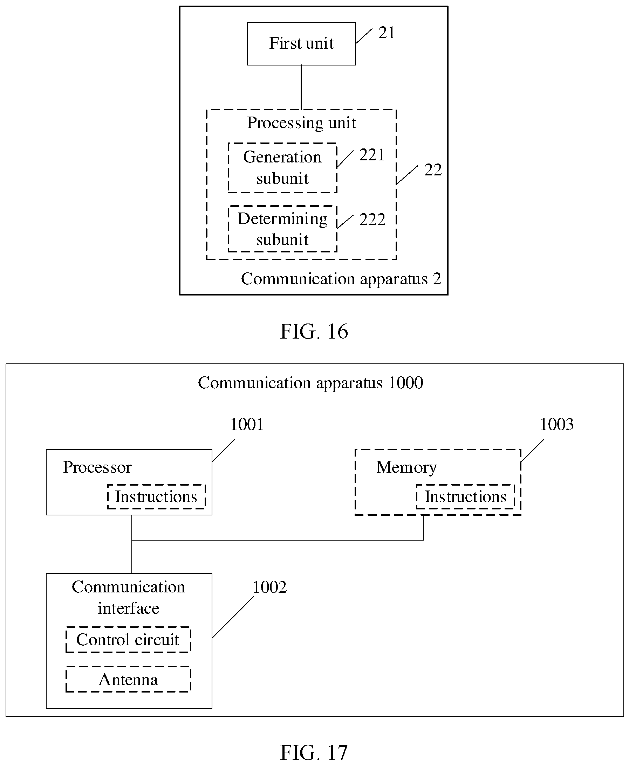

FIG. 16 is a schematic diagram of a structure of a communication apparatus 2 according to an embodiment of this application. The communication apparatus 2 may be a station or a chip in the station, for example, a Wi-Fi chip. As shown in FIG. 16, the communication apparatus 2 includes a first unit 21, and optionally includes a processing unit 22.

In a first design, the first unit 21 is configured to receive a trigger frame, where the trigger frame indicates a first resource unit allocated to the station, and the trigger frame includes an access point AP transmit power subfield and an uplink target receive power subfield. The first unit 21 is further configured to send a trigger-based physical layer protocol data unit TB PPDU at first transmit power. A second resource unit occupied by the TB PPDU is all or some resource units in the first resource unit. The first transmit power is determined based on an indication of the AP transmit power subfield, an indication of the uplink target receive power subfield, the second resource unit, and the first resource unit. It should be understood that the first unit 21 is configured to implement receiving and sending functions, and the first unit 21 may also be referred to as a transceiver unit.

Optionally, the processing unit 22 includes a generation subunit 221, and the generation subunit 221 is configured to generate the TB PPDU.

Optionally, the processing unit 22 further includes a determining subunit 222. The determining subunit 222 is configured to determine the first transmit power based on the indication of the AP transmit power subfield, the indication of the uplink target receive power subfield, the second resource unit, and the first resource unit.

Optionally, the first transmit power is determined based on a value indicated by the AP transmit power subfield, a value indicated by the uplink target receive power subfield, a size of the second resource unit, and a size of the first resource unit.

Optionally, that the first transmit power is determined based on an indication of the AP transmit power subfield, an indication of the uplink target receive power subfield, the second resource unit, and the first resource unit specifically includes: the first transmit power is determined based on the indication of the AP transmit power subfield, the indication of the uplink target receive power subfield, and a ratio of the size of the second resource unit to the size of the first resource unit.

Optionally, the size of the first resource unit is determined based on a total quantity of subcarriers included in the first resource unit, and the size of the second resource unit is determined based on a total quantity of subcarriers included in the second resource unit.

Optionally, the first transmit power is:

$$Tx_{pwr}^{STA} = PL_{DL} + TargetRx_{pwr} - 10\log_{10}(\frac{RU\_SIZE_{allocated}}{RU\_SIZE_{new}}).$$

$TxPw_i$ indicates first transmit power. TargetRx$_{pw}$ is a value indicated by an uplink target receive power subfield. RU_SIZE$_{allocated}$ indicates a size of a first resource unit allocated to a station. RU_SIZE$_{new}$ indicates a size of a second resource unit occupied by a TB PPDU. PL$_{DL}$ indicates a path loss from a first access point to the station, and the path loss from the first access point to the station is determined based on an indication of an AP transmit power subfield and receive power of the station.

Optionally, the size of the first resource unit is determined based on a quantity of first bandwidth sizes included in a bandwidth of the first resource unit, and the size of the second resource unit is determined based on a quantity of first bandwidth sizes included in a bandwidth of the second resource unit.

Optionally, the first bandwidth size is any one of the following: 20 MHz, 40 MHz, 80 MHz, 160 MHz, and 320 MHz.

Optionally, the first transmit power is:

$$Tx_{pwr}^{STA} = PL_{DL} + TargetRx_{pwr} - 10\log_{10}(\frac{RU\_BW\_Number_{allocated}}{RU\_BW\_Number_{new}}).$$

$Tx_{pwr}^{STA}$ indicates first transmit power. TargetRx$_{pwr}$ is a value indicated by an uplink target receive power subfield. RU_BW_Number$_{allocated}$ indicates a quantity of first bandwidth sizes included in a bandwidth of a first resource unit. RU_BW_Number$_{new}$ indicates a quantity of first bandwidth sizes included in a bandwidth of a second resource unit. PL$_{DL}$ indicates a path loss from a first access point to a station, and the path loss from the first access point to the station is determined based on an indication of an AP transmit power subfield and receive power of the station.

Optionally, the bandwidth of the first resource unit is from a lowest frequency of the first resource unit to a highest frequency of the first resource unit, and the bandwidth of the second resource unit is from a lowest frequency of the second resource unit to a highest frequency of the second resource unit. Alternatively, the bandwidth of the first resource unit is a sum of bandwidths occupied by one or more resource units included in the first resource unit, and the bandwidth of the second resource unit is a sum of bandwidths occupied by one or more resource units included in the second resource unit.

Optionally, the trigger frame further includes indication information, and the indication information indicates a manner of determining the first transmit power. The manner of determining the first transmit power includes one or more of the following: a first determining manner, a second determining manner, and a third determining manner. The first determining manner is determining based on the value indicated by the AP transmit power subfield, the value indicated by the uplink target receive power subfield, the total quantity of subcarriers included in the second resource unit, and the total quantity of subcarriers included in the first resource unit. The second determining manner is determining based on the value indicated by the AP transmit power subfield, the value indicated by the uplink target receive power subfield, the quantity of first bandwidth sizes included in the bandwidth of the second resource unit, and the quantity of first bandwidth sizes included in the bandwidth of the first resource unit. The third determining manner is determining based on the indication of the AP transmit power subfield and the indication of the uplink target receive power subfield.

Optionally, the indication information is located in a common information field or a user information field of the trigger frame.

It should be understood that the communication apparatus 2 in the first design may correspondingly perform Embodiment 1, and the foregoing operations or functions of the units in the communication apparatus 2 are configured to implement corresponding operations of the station in Embodiment 1. For brevity, details are not described herein again.

In a second design, the first unit 21 is configured to receive a trigger frame, where the trigger frame indicates a first resource unit allocated to a station. The trigger frame includes an AP transmit power subfield and an uplink target receive power subfield. The uplink target receive power subfield indicates receive power expected by the first access point on each 20 MHz, and a unit of the receive power is dBm/20 MHz. The first unit 21 is further configured to send a trigger-based physical layer protocol data unit TB PPDU at first transmit power, where a second resource unit occupied by the TB PPDU is all or some resource units in the first resource unit. The first transmit power is determined based on an indication of the AP transmit power subfield and an indication of the uplink target receive power subfield. It should be understood that the first unit 21 is configured to implement receiving and sending functions, and the first unit 21 may also be referred to as a transceiver unit.

Optionally, the processing unit 22 includes a generation subunit 221, and the generation subunit 221 is configured to generate the TB PPDU.

Optionally, the processing unit 22 further includes a determining subunit 222. The determining subunit 222 is configured to determine the first transmit power based on the indication of the AP transmit power subfield and the indication of the uplink target receive power subfield.

It should be understood that the communication apparatus 2 in the second design may correspondingly perform Embodiment 2, and the foregoing operations or functions of the units in the communication apparatus 2 are configured to implement corresponding operations of the station in Embodiment 2. For brevity, details are not described herein again.

In a third design, the first unit 21 is configured to receive a PSRR PPDU that includes a trigger frame. The trigger frame indicates a first resource unit allocated to the station. The first unit 21 is further configured to send a TB PPDU. A second resource unit occupied by the TB PPDU is some resource units in the first resource unit. The TB PPDU includes a first EHT PSR field and a second EHT PSR field. A value indicated by the first EHT PSR field is determined based on the first resource unit and the second resource unit. A value indicated by the second EHT PSR field is the same as a value indicated by a second EHT UL PSR field included in the trigger frame. It should be understood that the first unit 21 is configured to implement receiving and sending functions, and the first unit 21 may also be referred to as a transceiver unit.

Optionally, the processing unit 22 includes a generation subunit 221, and the generation subunit 221 is configured to generate the TB PPDU.

Optionally, the processing unit 22 further includes a determining subunit 222. The determining subunit 222 is configured to determine, based on the first resource unit and the second resource unit, a value indicated by the first EHT PSR field.

It should be understood that the communication apparatus 2 in the third design may correspondingly perform Embodiment 4, and the foregoing operations or functions of the units in the communication apparatus 2 are configured to implement corresponding operations of the first station in Embodiment 4. For brevity, details are not described herein again.

The foregoing describes the access point and the station in embodiments of this application. The following describes possible product forms of the access point and the station. It should be understood that any product in any form that has a function of the AP in FIG. 15 and any product in any form that has a function of the station in FIG. 16 fall within the protection scope of embodiments of this application. It should be further understood that the following description is only an example, and product forms of the AP and the station in embodiments of this application are not limited thereto.

In a possible product form, the AP and the STAin embodiments of this application may be implemented by using general bus architectures.

For ease of description, FIG. 17 is a schematic diagram of a structure of a communication apparatus 1000 according to an embodiment of this application. The communication apparatus 1000 may be an AP or a STA, or a chip in the AP or the STA. FIG. 17 shows only main components of the communication apparatus 1000. In addition to a processor 1001 and a communication interface 1002, the communication apparatus may further include a memory 1003 and an input/output apparatus (not shown in the figure).

The processor 1001 is mainly configured to process a communication protocol and communication data, control the communication apparatus, execute a software program, and process data of the software program. The memory 1003 is mainly configured to store the software program and the data. The communication interface 1002 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave by using the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

Optionally, the memory 1003 may be located in the processor 1001.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the communication interface 1002, and the memory 1003 may be connected through a communication bus.

In a design, the communication apparatus 1000 may be configured to perform a function of the first access point in Embodiment 1. The processor 1001 may be configured to generate the trigger frame sent in step S101 in FIG. 9, and/or configured to perform another process of the technology described in this specification. The communication interface 1002 may be configured to perform step S101 and step S 104 in FIG. 9, and/or configured to perform another process of the technology described in this specification.

In another design, the communication apparatus 1000 may be configured to perform a function of the station in Embodiment 1: The processor 1001 may be configured to generate the TB PPDU sent in step S103 in FIG. 9, and/or configured to perform another process of the technology described in this specification. The communication interface 1002 may be configured to perform step S102 and step S103 in FIG. 9, and/or configured to perform another process of the technology described in this specification.

In a design, the communication apparatus 1000 may be configured to perform a function of the first access point in Embodiment 2. The processor 1001 may be configured to generate the trigger frame sent in step S201 in FIG. 10, and/or configured to perform another process of the technology described in this specification. The communication interface 1002 may be configured to perform step S201 and step S204 in FIG. 10, and/or configured to perform another process of the technology described in this specification.

In another design, the communication apparatus 1000 may be configured to perform a function of the station in Embodiment 2: The processor 1001 may be configured to generate the TB PPDU sent in step S203 in FIG. 10, and/or configured to perform another process of the technology described in this specification. The communication interface 1002 may be configured to perform step S202 and step S203 in FIG. 10, and/or configured to perform another process of the technology described in this specification.

In a design, the communication apparatus 1000 may be configured to perform a function of the second access point in Embodiment 3. The processor 1001 may be configured to perform step S306 in FIG. 11B and generate the PSRT PPDU sent in step S307 in FIG. 11B, and/or configured to perform another process of the technology described in this specification. The communication interface 1002 may be configured to perform step S303 and step S307 in FIG. 11A and FIG. 11B, and/or configured to perform another process of the technology described in this specification.

In a design, the communication apparatus 1000 may be configured to perform a function of the first access point in Embodiment 4. The processor 1001 may be configured to generate the PSRR PPDU sent in step S401 in FIG. 13, and/or configured to perform another process of the technology described in this specification. The communication interface 1002 may be configured to perform step S401 and step S405 in FIG. 13, and/or configured to perform another process of the technology described in this specification.

In another design, the communication apparatus 1000 may be configured to perform a function of the first station in Embodiment 4: The processor 1001 may be configured to generate the TB PPDU sent in step S404 in FIG. 13, and/or configured to perform another process of the technology described in this specification. The communication interface 1002 may be configured to perform step S402 and step S404 in FIG. 13, and/or configured to perform another process of the technology described in this specification.

In any one of the foregoing designs, the processor 1001 may include a communication interface for implementing receiving and sending functions. For example, the communication interface may be a transceiver circuit, an interface, or an interface circuit. A transceiver circuit, an interface, or an interface circuit configured to implement the receiving function and that configured to implement the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing embodiments. The computer program may be fixed in the processor 1000. In this case, the processor 1001 may be implemented by hardware.

In an implementation, the communication apparatus 1000 may include a circuit, and the circuit may implement sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the communication interface may be manufactured using various IC technologies, for example, a complementary metal oxide semiconductor (complementary metal oxide semiconductor, CMOS), an N-type metal oxide semiconductor (N-type Metal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 17. The communication apparatus may be an independent device or may be a part of a large device. For example, the communication apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC such as a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, the AP and STA in embodiments of this application may be implemented by general-purpose processors.
A general-purpose processor for implementing the first access point includes a processing circuit and an input/output interface that is internally connected to and communicates with the processing circuit.
In a design, the general-purpose processor may be configured to perform a function of the first access point in Embodiment 1. Specifically, the processing circuit is configured to generate the TB PPDU sent in step S103 in FIG. 9, and/or configured to perform another process of the technology described in this specification. The input/output interface is configured to perform step S102 and step S103 in FIG. 9, and/or configured to perform another process of the technology described in this specification.
In a design, the general-purpose processor may be configured to perform a function of the first access point in Embodiment 2. Specifically, the processing circuit may be configured to generate the trigger frame sent in step S201 in FIG. 10, and/or another process of the technology described in this specification. The input/output interface may be configured to perform steps S201 and S204 in FIG. 10, and/or another process of the technology described in this specification.
In a design, the general-purpose processor may be configured to perform a function of the first access point in Embodiment 4. Specifically, the processing circuit may be configured to generate the PSRR PPDU sent in step S401 in FIG. 13, and/or another process of the technology described in this specification. The input/output interface may be configured to perform steps S401 and S405 in FIG. 13, and/or another process of the technology described in this specification.
The general-purpose processor for implementing the second access point includes a processing circuit and the input/output interface that is internally connected to and communicates with the processing circuit. The general purpose processor may be configured to perform a function of the second access point in the Embodiment 3. Specifically, the processing circuit may be configured to perform step S306 in FIG. 11B and generate the PSRT PPDU sent in step S307 in FIG. 11B, and/or configured to perform another process of the technology described in this specification. The input/output interface may be configured to perform step S303 and step S307 in FIG. 11A and FIG. 11B, and/or configured to perform another process of the technology described in this specification.
A general-purpose processor for implementing the station includes a processing circuit and an input/output interface that is internally connected to and communicates with the processing circuit.
In a design, the general-purpose processor may be configured to perform a function of the station in Embodiment 1. Specifically, the processing circuit is configured to generate the TB PPDU sent in step S103 in FIG. 9, and/or configured to perform another process of the technology described in this specification. The input/output interface is configured to perform step S102 and step S103 in FIG. 9, and/or configured to perform another process of the technology described in this specification.
In a design, the general-purpose processor may be configured to perform a function of the station in Embodiment 2. Specifically, the processing circuit may be configured to generate the TB PPDU sent in step S203 in FIG. 10, and/or another process of the technology described in this specification. The input/output interface may be configured to perform steps S202 and S203 in FIG. 10, and/or another process of the technology described in this specification.
In a design, the general-purpose processor may be configured to perform a function of the first station in Embodiment 4. Specifically, the processing circuit may be configured to generate the TB PPDU sent in step S404 in FIG. 13, and/or another process of the technology described in this specification. The input/output interface may be configured to perform steps S402 and S404 in FIG. 13, and/or another process of the technology described in this specification.

It should be understood that the communication apparatuses in the foregoing various product forms have any function of the AP or STA in any one of the foregoing embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system including an AP and a STA. The AP and the STA may perform the method in any one of the foregoing embodiments.

Methods or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are only specific implementations of this application, but are not intended to limit the protection scope of this application. Any modification, equivalent replacement, improvement, or the like made based on the technical solutions of this application shall fall within the protection scope of this application.

**Claims**

1. A method for determining transmit power in a wireless local area network, comprising:

   receiving, by a station, a trigger frame, wherein the trigger frame indicates a first resource unit allocated to the station, and the trigger frame comprises an access point AP transmit power subfield and an uplink target receive power subfield;
   sending, by the station, a trigger-based physical layer protocol data unit TB PPDU at first transmit power, wherein a second resource unit occupied by the TB PPDU is all or some resource units in the first resource unit; and
   the first transmit power is determined based on an indication of the AP transmit power subfield, an indication of the uplink target receive power subfield, the second resource unit, and the first resource unit.

2. A method for determining transmit power in a wireless local area network, comprising:

   sending, by a first access point, a trigger frame, wherein the trigger frame indicates a first resource unit allocated to a station, and the trigger frame comprises an access point AP transmit power subfield and an uplink target receive power subfield; and
   receiving, by the first access point, a TB PPDU, wherein power of receiving the TB PPDU is determined based on first transmit power and a path loss from the first access point to the station, and the first transmit power is determined based on an indication of the AP transmit power subfield, an indication of the uplink target receive power subfield, a second resource unit, and the first resource unit.

3. The method according to claim 1 or 2, wherein the first transmit power is determined based on a value indicated by the AP transmit power subfield, a value indicated by the uplink target receive power subfield, a size of the second resource unit, and a size of the first resource unit.

4. The method according to any one of claims 1 to 3, wherein that the first transmit power is determined based on an indication of the AP transmit power subfield, an indication of the uplink target receive power subfield, a second resource unit, and the first resource unit specifically comprises:
the first transmit power is determined based on the indication of the AP transmit power subfield, the indication of the uplink target receive power subfield, and a ratio of the size of the second resource unit to the size of the first resource unit.

5. The method according to claim 3 or 4, wherein the size of the first resource unit is determined based on a total quantity of subcarriers comprised in the first resource unit, and the size of the second resource unit is determined based on a total quantity of subcarriers comprised in the second resource unit.

6. The method according to any one of claims 1 to 5, wherein the first transmit power is:

$$Tx_{pwr}^{STA} = PL_{DL} + TargetRx_{pwr} - 10\log_{10}(\frac{RU\_SIZE_{allocated}}{RU\_SIZE_{new}}),$$

wherein

$Tx_{pwr}^{STA}$ indicates the first transmit power, $TargetRx_{pwr}$ is the value indicated by the uplink target receive power subfield, $RU\_SIZE_{allocated}$ indicates the size of the first resource unit allocated to the station, and $RU\_SIZE_{new}$ indicates the size of the second resource unit occupied by the TB PPDU; and
$PL_{DL}$ indicates the path loss from the first access point to the station, and the path loss from the first access point to the station is determined based on the indication of the AP transmit power subfield and receive power of the station.

7. The method according to claim 3 or 4, wherein the size of the first resource unit is determined based on a quantity of first bandwidth sizes comprised in a bandwidth of the first resource unit, and the size of the second resource unit is determined based on a quantity of first bandwidth sizes comprised in a bandwidth of the second resource unit.

8. The method according to claim 7, wherein the first bandwidth size is any one of the following: 20 MHz, 40 MHz, 80 MHz, 160 MHz, and 320 MHz.

9. The method according to claim 7 or 8, wherein the first transmit power is:

$$Tx_{pwr}^{STA} = PL_{DL} + TargetRx_{pwr} - 10\log_{10}(\frac{RU\_BW\_Number_{allocated}}{RU\_BW\_Number_{new}}),$$

wherein

$Tx_{pwr}^{STA}$ indicates the first transmit power, $TargetRx_{pwr}$ is the value indicated by the uplink target receive power subfield, $RU\_BW\_Number_{allocated}$ indicates the quantity of first bandwidth sizes comprised in the bandwidth of the first resource unit, and $RU\_BW\_Number_{new}$ indicates the quantity of first bandwidth sizes comprised in the bandwidth of the second resource unit; and
$PL_{DL}$ indicates the path loss from the first access point to the station, and the path loss from the first access point to the station is determined based on the indication of the AP transmit power subfield and receive power of the station.

10. The method according to any one of claims 7 to 9, wherein the bandwidth of the first resource unit is from a lowest frequency of the first resource unit to a highest frequency of the first resource unit, and the bandwidth of the second resource unit is from a lowest frequency of the second resource unit to a highest frequency of the second resource unit; or

the bandwidth of the first resource unit is a sum of bandwidths occupied by one or more resource units comprised in the first resource unit, and the bandwidth of the second resource unit is a sum of bandwidths occupied by one or more resource units comprised in the second resource unit.

11. The method according to any one of claims 1 to 10, wherein the trigger frame further comprises indication information, and the indication information indicates a manner of determining the first transmit power;

the manner of determining the first transmit power comprises one or more of the following: a first determining manner, a second determining manner, and a third determining manner;

the first determining manner is determining based on the value indicated by the AP transmit power subfield, the value indicated by the uplink target receive power subfield, the total quantity of subcarriers comprised in the second resource unit, and the total quantity of subcarriers comprised in the first resource unit;

the second determining manner is determining based on the value indicated by the AP transmit power subfield, the value indicated by the uplink target receive power subfield, the quantity of first bandwidth sizes comprised in the bandwidth of the second resource unit, and the quantity of first bandwidth sizes comprised in the bandwidth of the first resource unit; and

the third determining manner is determining based on the indication of the AP transmit power subfield and the indication of the uplink target receive power subfield.

12. The method according to claim 11, wherein the indication information is located in a common information field or a user information field of the trigger frame.

13. A communication apparatus, comprising a processor and a communication interface, wherein the communication apparatus is configured to perform the method according to any one of claims 1 to 12.

14. A computer program product comprising program instructions, wherein when the program instructions are run on a computer, the computer is enabled to perform the method according to any one of claims 1 to 12.

15. A computer-readable storage medium, wherein the computer-readable storage medium stores program instructions, and when the program instructions are run, the method according to any one of claims 1 to 12 is performed.

16. A communication apparatus, specifically a station or a chip in the station, comprising:

a first unit, configured to receive a trigger frame, wherein the trigger frame indicates a first resource unit allocated to the station, and the trigger frame comprises an access point AP transmit power subfield and an uplink target receive power subfield;

the first unit is further configured to send a trigger-based physical layer protocol data unit TB PPDU at first transmit power, wherein a second resource unit occupied by the TB PPDU is all or some resource units in the first resource unit; and

the first transmit power is determined based on an indication of the AP transmit power subfield, an indication of the uplink target receive power subfield, the second resource unit, and the first resource unit.

17. A communication apparatus, specifically a first access point or a chip in the first access point, comprising:

a second unit, configured to send a trigger frame, wherein the trigger frame indicates a first resource unit allocated to a station, and the trigger frame comprises an access point AP transmit power subfield and an uplink target receive power subfield; and

the second unit is further configured to receive a TB PPDU, wherein power of receiving the TB PPDU is determined based on first transmit power and a path loss from the first access point to the station, and the first transmit power is determined based on an indication of the AP transmit power subfield, an indication of the uplink target receive power subfield, a second resource unit, and the first resource unit.

18. The communication apparatus according to claim 16 or 17, wherein the first transmit power is determined based on a value indicated by the AP transmit power subfield, a value indicated by the uplink target receive power subfield, a size of the second resource unit, and a size of the first resource unit.

19. The communication apparatus according to any one of claims 16 to 18, wherein that the first transmit power is determined based on an indication of the AP transmit power subfield, an indication of the uplink target receive power subfield, a second resource unit, and the first resource unit specifically comprises:
the first transmit power is determined based on the indication of the AP transmit power subfield, the indication of the uplink target receive power subfield, and a ratio of the size of the second resource unit to the size of the first resource unit.

20. The communication apparatus according to claim 18 or 19, wherein the size of the first resource unit is determined based on a total quantity of subcarriers comprised in the first resource unit, and the size of the second resource unit is determined based on a total quantity of subcarriers comprised in the second resource unit.

21. The communication apparatus according to any one of claims 16 to 20, wherein the first transmit power is:

$$Tx_{pwr}^{STA} = PL_{DL} + TargetRx_{pwr} - 10\log_{10}(\frac{RU\_SIZE_{allocated}}{RU\_SIZE_{new}}),$$

wherein

$Tx_{pwr}^{STA}$ indicates the first transmit power, $TargetRx_{pwr}$ is the value indicated by the uplink target receive power subfield, $RU\_SIZE_{allocated}$ indicates the size of the first resource unit allocated to the station, and $RU\_SIZE_{new}$ indicates the size of the second resource unit occupied by the TB PPDU; and
$PL_{DL}$ indicates the path loss from the first access point to the station, and the path loss from the first access point to the station is determined based on the indication of the AP transmit power subfield and receive power of the station.

22. The communication apparatus according to claim 18 or 19, wherein the size of the first resource unit is determined based on a quantity of first bandwidth sizes comprised in a bandwidth of the first resource unit, and the size of the second resource unit is determined based on a quantity of first bandwidth sizes comprised in a bandwidth of the second resource unit.

23. The communication apparatus according to claim 22, wherein the first bandwidth size is any one of the following: 20 MHz, 40 MHz, 80 MHz, 160 MHz, and 320 MHz.

24. The communication apparatus according to claim 22 or 23, wherein the first transmit power is:

$$Tx_{pwr}^{STA} = PL_{DL} + TargetRx_{pwr} - 10\log_{10}(\frac{RU\_BW\_Number_{allocated}}{RU\_BW\_Number_{new}}),$$

wherein

$Tx_{pwr}^{STA}$ indicates the first transmit power, $TargetRx_{pwr}$ is the value indicated by the uplink target receive power subfield, $RU\_BW\_Number_{allocated}$ indicates the quantity of first bandwidth sizes comprised in the bandwidth of the first resource unit, and $RU\_BW\_Number_{new}$ indicates the quantity of first bandwidth sizes comprised in the bandwidth of the second resource unit; and
$PL_{DL}$ indicates the path loss from the first access point to the station, and the path loss from the first access point to the station is determined based on the indication of the AP transmit power subfield and receive power of the station.

25. The communication apparatus according to any one of claims 22 to 24, wherein the bandwidth of the first resource unit is from a lowest frequency of the first resource unit to a highest frequency of the first resource unit, and the bandwidth of the second resource unit is from a lowest frequency of the second resource unit to a highest frequency of the second resource unit; or
the bandwidth of the first resource unit is a sum of bandwidths occupied by one or more resource units comprised in the first resource unit, and the bandwidth of the second resource unit is a sum of bandwidths occupied by one or more resource units comprised in the second resource unit.

26. The communication apparatus according to any one of claims 16 to 25, wherein the trigger frame further comprises indication information, and the indication information indicates a manner of determining the first transmit power;

the manner of determining the first transmit power comprises one or more of the following: a first determining manner, a second determining manner, and a third determining manner;
the first determining manner is determining based on the value indicated by the AP transmit power subfield, the value indicated by the uplink target receive power subfield, the total quantity of subcarriers comprised in the second resource unit, and the total quantity of subcarriers comprised in the first resource unit;
the second determining manner is determining based on the value indicated by the AP transmit power subfield, the value indicated by the uplink target receive power subfield, the quantity of first bandwidth sizes comprised in the bandwidth of the second resource unit, and the quantity of first bandwidth sizes comprised in the bandwidth of the first resource unit; and
the third determining manner is determining based on the indication of the AP transmit power subfield and the indication of the uplink target receive power subfield.

27. The communication apparatus according to claim 26, wherein the indication information is located in a common information field or a user information field of the trigger frame.

FIG. 1

FIG. 2a

FIG. 2b

Trigger
frame
(trigger
frame)
80 MHz

Busy

Idle

TB PPDU (STA 1, 484-tone RU)

Idle

TB PPDU (STA 4, 242-tone RU)

Time (time)

Tone: tone

FIG. 3a

Trigger
frame
(trigger
frame)
80 MHz

Busy

Idle

TB PPDU (STA 1, 242-tone RU)

Idle

TB PPDU (STA 4, 242-tone RU)

Time (time)

Tone: tone

FIG. 3b

Common information field

| Trigger Type Trigger frame type | UL Length Uplink length | More TF More trigger frames | CS Required Carrier sense required | UL Bandwidth Uplink bandwidth | GI And EHT-LTF Type Guard interval and EHT long training field type | MU-MIMO EHT-LTF Mode Mode | Number of EHT-LTF Symbols And Midamble Periodicity Number of EHT-LTF symbols and midamble periodicity | UL STBC Uplink space time block code | LDPC Extra Symbol Segment Low density parity check extra symbol segment |
|---|---|---|---|---|---|---|---|---|---|
| AP TX Power AP transmit power | Pre-FEC Padding Factor Pre-forward error correction padding factor | PE Disambiguity Packet extension disambiguity | UL Spatial Reuse Uplink spatial reuse | Doppler Doppler | HE/EHT P160 (primary 160) | Special user info field present Special user information field present | Reserved Reserved | Reserved Reserved | Trigger dependent common information Trigger Dependent Common Info |

(EHT variant) user information field

| AID 12 Association identifier 12 | RU Allocation Resource unit allocation | UL FEC Coding Type Uplink forward error correction coding type | UL EHT-MCS Modulation and coding scheme | Reserved Reserved | SS Allocation/ RA-RU Information Space stream allocation/ Random access RU information | UL Target receive power Uplink target receive power | PS160 Primary/ secondary 160 MHz | Trigger dependent station information Trigger Dependent User Info |
|---|---|---|---|---|---|---|---|---|

FIG. 4

BSS 2 (basic service set 2)

BSS 1 (basic service set 1)

STA 1

AP 1

AP 2

STA 3

STA 2

Overlapping area (or
overlapping basic service set)

FIG. 5a

BSS 1 (basic service set 1)

STA 1

AP 1

AP 2

STA 3

STA2

Both a BSS 2 (basic service set 2), and
an OBSS (overlapping basic service set)

FIG. 5b

Duration from common information field
(duration of a common information field)

AP 1 | PSRR PPDU | →————————————————→ Time

STA 1 | HE TB PPDU | Time

AP 2 | PSRT PPDU | Time

PHY-CCARESET.request
(physical layer-clear channel
assessment reset request)

STA 2 | Block Ack
(block
acknowledgment) | Time

PSRR PPDU: parameterized spatial reuse reception physical layer protocol data unit
PSRT PPDU: parameterized spatial reuse transmission physical layer protocol data unit
HE TB PPDU: high efficiency trigger-based physical layer protocol data unit

FIG. 6a

Duration from common information field
(duration of a common information field)

AP 1 | PSRR PPDU | →————————————————→ Time

STA 1 | HE/EHT TB PPDU | Time

AP 2 | PSRT PPDU | Time

PHY-CCARESET.request
(physical layer-clear channel
assessment reset request)

STA 2 | Block Ack
(block
acknowledgement) | Time

PSRR PPDU: parameterized spatial reuse reception physical layer protocol data unit
PSRT PPDU: parameterized spatial reuse transmission physical layer protocol data unit
HE/EHT TB PPDU: high efficiency/extremely high throughput trigger-based physical
layer protocol data unit

FIG. 6b

Common information field
(common information field)

| 4 bits | 4 bits | 4 bits | 4 bits |
|---|---|---|---|
| UL PSR1<br>Uplink<br>parameterized<br>spatial reuse 1 | UL PSR2<br>Uplink<br>parameterized<br>spatial reuse 2 | UL PSR3<br>Uplink<br>parameterized<br>spatial reuse 3 | UL PSR4<br>Uplink<br>parameterized<br>spatial reuse 4 |

Bit: bit

User information field list
(user information field list)

| User Info 1<br>User<br>information | ... | User Info<br>N |
|---|---|---|

Special user
information field

| AID 12 (AID<br>12 = 2007)<br>Association<br>identifier 12 | ... | EHT UL PSR1<br>EHT uplink<br>parameterized<br>spatial reuse 1 | EHT UL PSR2<br>EHT uplink<br>parameterized<br>spatial reuse 2 | ... |
|---|---|---|---|---|
| | | 4 bits | 4 bits | |

FIG. 7

FIG. 8

```
┌─────────────┐                                            ┌─────────────┐
│ First access│                                            │   Station   │
│    point    │                                            │             │
└─────────────┘                                            └─────────────┘
```

S101: Send a trigger frame, where the trigger frame indicates
a first resource unit allocated to the station, and the trigger
frame includes an AP transmit power subfield and an uplink
target receive power subfield

S102: Receive the trigger
frame

S103: Send a trigger-based physical layer protocol data unit
TB PPDU at first transmit power, where a second resource
unit occupied by the TB PPDU is all or some resource units in
the first resource unit, and the first transmit power is
determined based on an indication of the AP transmit power
subfield, an indication of the uplink target receive power
subfield, the second resource unit, and the first resource unit

S104: Receive the TB PPDU, where
power of receiving the TB PPDU
by the first access point is
determined based on the first
transmit power and a path loss from
the first access point to the station

FIG. 9

First access point

Station

S201: Send a trigger frame, where the trigger frame indicates a first resource unit allocated to the station, the trigger frame includes an AP transmit power subfield and an uplink target receive power subfield, the uplink target receive power subfield indicates receive power expected by the first access point on each 20 MHz, and a unit of the receive power is dBm/20 MHz

S202: Receive the trigger frame

S203: Send a trigger-based physical layer protocol data unit TB PPDU at first transmit power, where a second resource unit occupied by the TB PPDU is all or some resource units in the first resource unit, and the first transmit power is determined based on an indication of the AP transmit power subfield and an indication of the uplink target receive power subfield

S204: Receive the TB PPDU, where power of receiving the TB PPDU by the first access point is determined based on the first transmit power and a path loss from the first access point to the station

FIG. 10

Located in a same overlapping basic service set

| First station | First access point | Second access point | Second station |

S301: The first access point sends a parameterized spatial reuse reception PSRR physical layer protocol data unit PPDU that includes a trigger frame, where the trigger frame indicates a first resource unit allocated to the first station

PSRR PPDU

S302: Receive the PSRR PPDU that includes the trigger frame

S303: Receive the PSRR PPDU that includes the trigger frame

S304: Send a trigger-based physical layer protocol data unit TB PPDU, where a second resource unit occupied by the TB PPDU is some resource units in the first resource unit

TB PPDU

TO FIG. 11B

TO FIG. 11B

TO FIG. 11B

TO FIG. 11B

FIG. 11A

CONT.
FROM
FIG. 11A

CONT.
FROM
FIG. 11A

CONT.
FROM
FIG. 11A

CONT.
FROM
FIG. 11A

S305: Receive
the TB PPDU

S306: Determine the second
resource unit occupied by the TB
PPDU, where the second resource
unit is some resource units in the
first resource unit

S307: Send a PSRT
PPDU at transmit
power of the
parameterized spatial
reuse PSRT physical
layer protocol data unit
PPDU, where the
transmit power of the
PSRT PPDU is
determined based on
the first resource unit,
the second resource
unit, an indication of an
EHT parameterized
spatial reuse PSR field
included in the TB
PPDU, and/or an
indication of an EHT
uplink parameterized
spatial reuse UL PSR
field included in the
trigger frame, and
receive power of
receiving the PSRR
PPDU by the second
access point

S308: Receive the
PSRT PPDU

FIG. 11B

160 MHz/2×996-tone RU

| 20 | 20 | 20 | 20 | 20 | 20 | 20 | 20 |

40 MHz/484-tone RU

Tone: tone

FIG. 12

Located in a same overlapping basic service set

| First station | | First access point | Second access point | | Second station |

S401: The first access point sends a parameterized spatial reuse reception PSRR physical layer protocol data unit PPDU that includes a trigger frame, where the trigger frame indicates a first resource unit allocated to the first station

PSRR PPDU

S402: Receive the PSRR PPDU that includes the trigger frame

S403: Receive the PSRR PPDU that includes the trigger frame

S404: Send a trigger-based physical layer protocol data unit TB PPDU, where a second resource unit occupied by the TB PPDU is some of resource units in the first resource unit, the TB PPDU includes a first EHT PSR field and a second EHT PSR field, a value indicated by the first EHT PSR field is determined based on the first resource unit and the second resource unit, and a value indicated by the second EHT PSR field is the same as a value indicated by a second EHT UL PSR field included in the trigger frame

S406: Send a PSRT PPDU at transmit power of the parameterized spatial reuse PSRT physical layer protocol data unit PPDU, where the transmit power of the PSRT PPDU is determined based on the indication of the first EHT PSR field, the indication of the second EHT PSR field, and receive power of receiving the PSRR PPDU by the second access point

TB PPDU

S405: Receive the TB PPDU

S407: Receive the PSRT PPDU

FIG. 13

EHT PSR1
field/Frequency
indication range of an
EHT UL PSR1 field

EHT PSR2
field/Frequency
indication range of an
EHT UL PSR2 field

160 MHz/2×996-tone RU

| 20 | 20 | 20 | 20 | 20 | 20 | 20 | 20 |

80 MHz/996-tone RU

Tone: tone

FIG. 14

Processing unit  12

Second unit  11

Communication apparatus 1

FIG. 15

First unit / 21

Processing unit

Generation subunit / 221

Determining subunit / 222

/ 22

Communication apparatus 2

FIG. 16

Communication apparatus 1000

1001

Processor

Instructions

1003

Memory

Instructions

Communication interface

1002

Control circuit

Antenna

FIG. 17

## INTERNATIONAL SEARCH REPORT

| International application No. |
|---|
| **PCT/CN2022/095078** |

**A. CLASSIFICATION OF SUBJECT MATTER**

H04W 52/18(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNKI; WPABS; ENTXT: 触发帧, 物理层协议数据单元, 物理协议数据单元, 发送, 发射, 传输, 接收, 功率, 资源单元, 字段, 路损; trigger frame, PPDU, physical layer protocol data unit, physical protocol data unit, transmit, send, receive, reception, power, resource unit, RU, MRU, field, path loss

**C. DOCUMENTS CONSIDERED TO BE RELEVANT**

| Category* | Citation of document, with indication, where appropriate, of the relevant passages | Relevant to claim No. |
|---|---|---|
| X | WO 2017156151 A1 (INTERDIGITAL PATENT HOLDINGS INC.) 14 September 2017 (2017-09-14) description, paragraphs [0030]-[0098] | 1-27 |
| A | CN 108055879 A (INTERDIGITAL PATENT HOLDINGS, INC.) 18 May 2018 (2018-05-18) entire document | 1-27 |
| A | CN 111295911 A (APPLE INC.) 16 June 2020 (2020-06-16) entire document | 1-27 |
| A | WO 2017044696 A1 (INTERDIGITAL PATENT HOLDINGS INC.) 16 March 2017 (2017-03-16) entire document | 1-27 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 July 2022** | **28 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/095078**

| Patent document cited in search report | | | Publication date (day/month/year) | Patent family member(s) | | | Publication date (day/month/year) |
|---|---|---|---|---|---|---|---|
| WO | 2017156151 | A1 | 14 September 2017 | TW | 201735572 | A | 01 October 2017 |
| CN | 108055879 | A | 18 May 2018 | JP | 2021005895 | A | 14 January 2021 |
| | | | | US | 2021410078 | A1 | 30 December 2021 |
| | | | | JP | 2018530228 | A | 11 October 2018 |
| | | | | TW | 201713138 | A | 01 April 2017 |
| | | | | WO | 2017044696 | A1 | 16 March 2017 |
| | | | | US | 2020107270 | A1 | 02 April 2020 |
| | | | | US | 2018332540 | A1 | 15 November 2018 |
| | | | | CA | 2997759 | A1 | 16 March 2017 |
| | | | | EP | 3348098 | A1 | 18 July 2018 |
| | | | | KR | 20180068960 | A | 22 June 2018 |
| CN | 111295911 | A | 16 June 2020 | WO | 2019060022 | A1 | 28 March 2019 |
| | | | | US | 2019090200 | A1 | 21 March 2019 |
| | | | | EP | 3685610 | A1 | 29 July 2020 |
| WO | 2017044696 | A1 | 16 March 2017 | JP | 2021005895 | A | 14 January 2021 |
| | | | | US | 2021410078 | A1 | 30 December 2021 |
| | | | | JP | 2018530228 | A | 11 October 2018 |
| | | | | CN | 108055879 | A | 18 May 2018 |
| | | | | TW | 201713138 | A | 01 April 2017 |
| | | | | US | 2020107270 | A1 | 02 April 2020 |
| | | | | US | 2018332540 | A1 | 15 November 2018 |
| | | | | CA | 2997759 | A1 | 16 March 2017 |
| | | | | EP | 3348098 | A1 | 18 July 2018 |
| | | | | KR | 20180068960 | A | 22 June 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110657250